# EUROPEAN PATENT SPECIFICATION

(11) **EP 4 468 235 B1**
(45) Date of publication and mention of the grant of the patent: **11.11.2026**
(21) Application number: 24177218.5
(22) Date of filing: 22.05.2024
(51) Int. Cl.: G06T 5/92, G06T 5/60, G09G 5/00, G09G 5/02

(54) **HIGH DYNAMIC RANGE (HDR) IMAGE PROCESSING WITH ADAPTIVE COLOR VOLUME MAPPING**
BILDVERARBEITUNG MIT HOHEM DYNAMIKBEREICH (HDR) MIT ADAPTIVER FARBVOLUMENABBILDUNG
TRAITEMENT D'IMAGE À PLAGE DYNAMIQUE ÉLEVÉE (HDR) AVEC MAPPAGE DE VOLUME DE COULEUR ADAPTATIF

(30) Priority: 24.05.2023 US 202318322926
(43) Date of publication of application: 27.11.2024
(73) Proprietor: Synaptics Incorporated, San Jose, CA 95131 (US)
(72) Inventor: MANCHI, Chandranath, San Jose, 95131 (US)
(74) Representative: J A Kemp LLP

(56) References cited:
- GB-A- 2 608 990
- SAFDAR MUHAMMAD ET AL: "Perceptually uniform color space for image signals including high dynamic range and wide gamut", OPTICS EXPRESS, vol. 25, no. 13, 26 June 2017 (2017-06-26), US, pages 15131, XP093213189, ISSN: 1094-4087, DOI: 10.1364/OE.25.015131

## Description

### TECHNICAL FIELD

The present implementations relate generally to image processing, and specifically to high dynamic range (HDR) image processing with adaptive tone and color volume mapping.

### BACKGROUND OF RELATED ART

Display devices (such as televisions, set-top boxes, computers, and mobile phones) may use different imaging technologies than those used by image capture devices (such as cameras and video recorders). Advancements in display technologies have resulted in improved capabilities such as high dynamic range, wider color gamut and migration from high definition (HD) display to ultra-high definition (UHD) display technologies. As a result, image processing may be used to properly render, on a given display, images captured by devices with different system capabilities and standards. For example, a display device that is capable of displaying only standard dynamic range (SDR) content may be unable to reproduce the full range of color, brightness, or contrast of images captured in a high dynamic range (HDR) format. An image processor may modify the raw image data produced by an image capture device so that the image can be reproduced more accurately or realistically on the display device (such as to utilize the full dynamic range of the display). A method for converting HDR video signals to SDR signals is described in GB 2 608 990 A.

Some image processing techniques (also referred to as "tone mapping") may reduce the color, brightness, or contrast of an HDR image to be rendered on an SDR display. Some other image processing techniques (also referred to as "inverse tone mapping") may increase the color, brightness, or contrast of an SDR image to be rendered on an HDR display. Even when the image capture and display devices both support HDR, image processing can further enhance the quality of the displayed image due to differences between the display environment (such as a television with electronically-limited brightness, color, contrast, and resolution) and the image capture environment (such as a natural environment with unlimited brightness, color, contrast, and resolution). As image capture and display technologies continue to evolve, new image processing techniques are needed to bridge the capabilities (such as dynamic range or color gamut) between image capture and display devices.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of image processing. The method includes receiving first image data representing an image produced by an image capture device based on an opto-electrical transfer function (OETF); transforming the first image data into second image data based on an inverse of the OETF, where the second image data includes red (R), green (G), and blue (B) channels associated with an RGB color space; converting the second image data to third image data having lightness (J_{z}), redness-greenness (a_{z}), and yellowness-blueness (b_{z}) channels associated with a J_{z}a_{z}b_{z} color space; mapping the J_{z}, a_{z}, and b_{z} channels of the third image data to J_{z}, a_{z}, and b_{z} channels of display data based at least in part on a dynamic range or color gamut associated with a display device; and processing the display data for display by the display device.

Another innovative aspect of the subject matter of this disclosure can be implemented in an image processor including a processing system, comprising a hardware process and software process, which cause the image processor to receive first image data representing an image produced by an image capture device based on an OETF; transform the first image data into second image data based on an inverse of the OETF, where the second image data includes red (R), green (G), and blue (B) channels associated with an RGB color space; convert the second image data to third image data having lightness (J_{z}), redness-greenness (a_{z}), and yellowness-blueness (b_{z}) channels associated with a J_{z}a_{z}b_{z} color space; map the J_{z}, a_{z}, and b_{z} channels of the third image data to J_{z}, a_{z}, and b_{z} channels of display data based at least in part on a dynamic range or color gamut associated with a display device; and process the display data for display by the display device.

### BRIEF DESCRIPTION OF THE DRAWINGS

The present implementations are illustrated by way of example and are not intended to be limited by the figures of the accompanying drawings.
FIG. 1 shows a block diagram of an example image capture and display system, according to some implementations.
FIG. 2 shows a block diagram of an example image processing system, according to some implementations.
FIG. 3 shows a block diagram of an example color volume mapping (CVM) system, according to some implementations.
FIG. 4 shows a block diagram of an example system for global CVM, according to some implementations.
FIG. 5 shows a block diagram of an example system for local CVM, according to some implementations.
FIG. 6 shows an example mapping of global pixel tone values to local pixel tone values with adaptive histogram equalization.
FIG. 7 shows a block diagram of an example adaptive detail processor, according to some implementations.
FIG. 8 shows another block diagram of an example image processing system, according to some implementations.
FIG. 9 shows an illustrative flowchart depicting an example operation for image processing, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, image processing may be used to properly render, on a given display, images captured by devices with different system capabilities and standards. More specifically, an image processor may modify the raw image data produced by an image capture device so that the image can be reproduced more accurately or realistically on the display device (such as to utilize the full dynamic range of the display). Many existing image capture and display devices are configured to process image data having luma (Y) and chrominance (UV) color channels. As such, many existing image processors are designed to perform tone mapping or inverse tone mapping operations in a YUV color space. However, the Y and UV color channels are not perfectly orthogonal. In other words, changing the dynamic range of the Y component of a given image also changes the saturation of any distinguishable hue by a variable amount. Thus, performing tone mapping or inverse tone mapping in the YUV color space may impose a significant penalty on quality, latency, memory, and processing resources, which may not be suitable for many image processing applications (such as for processing video or for implementation in battery-powered devices or other edge devices with limited resources).

Aspects of the present disclosure recognize that image processing overhead can be significantly reduced, without loss of accuracy, by performing tone mapping and inverse tone mapping operations in a perceptually uniform color space (UCS). A UCS is any color space in which the geometric distance between any two points in the color space reflects an equal amount of change in perceived color. An example suitable UCS for tone mapping and inverse tone mapping is the J_{z}a_{z}b_{z} color space, which is defined by lightness (J_{z}), redness-greenness (a_{z}), and yellowness-blueness (b_{z}) color components.

Various aspects relate generally to image processing, and more particularly, to color volume mapping (CVM) techniques that operate in the J_{z}a_{z}b_{z} color space. In some aspects, an image processing system may receive image data having color channels associated with a color space that is not perceptually uniform (such as RGB or YUV) and may convert the image data to the J_{z}a_{z}b_{z} color space. In some implementations, the image processing system may perform a global CVM operation which maps a range of J_{z}, a_{z}, and b_{z} values supported by the image source (such as an image capture device) to a range of j_{z}, a_{z}, and b_{z} values supported by the image target (such as a display device). In some other implementations, the image processing system may further perform a local CVM operation which adaptively tunes the J_{z}, a_{z}, and b_{z} channels of image data based on various properties of the received image. Still further, in some implementations, the image processing system may adaptively blend J_{z} values at the edges of objects and other features to preserve high-frequency details in low-contrast regions of the received image.

Particular implementations of the subject matter described in this disclosure can be implemented to realize one or more of the following potential advantages. By processing image data in a perceptually uniform color space (such as J_{z}a_{z}b_{z}), aspects of the present disclosure may substantially reduce the latency and computational load of CVM operations (such as tone mapping and inverse tone mapping) without loss of accuracy. For example, unlike the YUV color space, the J_{z}a_{z}b_{z} color space is a perceptually uniform color space. As such, tone mapping and inverse tone mapping operations can be performed using two-dimensional (2D) lookup tables (LUTs) in the J_{z}a_{z}b_{z} color space (compared to 3D LUTs which are generally used for tone mapping and inverse tone mapping operations in the YUV color space). Additionally, aspects of the present disclosure support high data precision for video processing and provide a wide range of programming options and hardware flexibility. Thus, the CVM techniques of the present implementations may be suitable for limited-area, low-latency applications (such as set-top boxes, digital televisions, streaming devices, and other video applications) or devices with limited memory or processing resources (such as low-power edge devices).

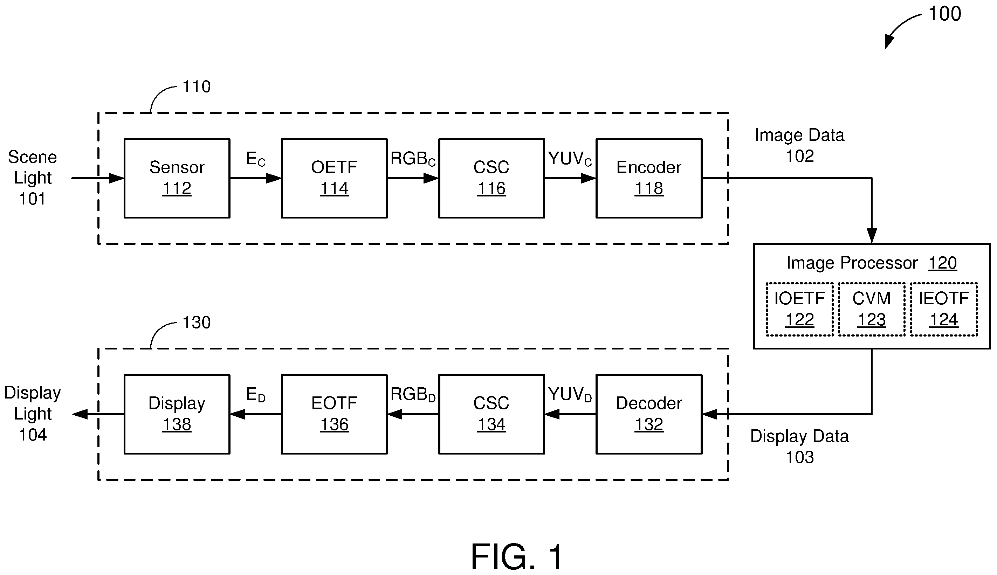

FIG. 1 shows a block diagram of an example image capture and display system 100, according to some implementations. The system 100 includes an image capture device 110 (also referred to as an "image source"), an image processor 120, and a display device 130 (also referred to as an "image target"). The image capture device 110 captures a pattern of light 101 (also referred to as "scene light") and converts the captured light to a digital image. For example, the image capture device 110 may be a camera. The display device 130 displays the digital image by reproducing the pattern of light, as display light 104, on a corresponding display surface. Example suitable display devices include televisions, computer monitors, laptops, tablets, and smartphones, among other examples.

The image capture device 110 includes a sensor 112, an opto-electrical transfer function (OETF) 114, a color-space converter (CSC) 116, and an encoder 118. The sensor 112 converts the scene light 101 to an electrical signal (Ec). In some implementations, the sensor 112 may include an array of optical sensing elements (such as charge-coupled device (CCD) cells or complementary metal-oxide-semiconductor (CMOS) cells), each configured to sample a respective pixel of the scene light 101. The OETF 114 transforms the electrical signal Ec to coded image data (RGBc) having red (R), green (G), and blue (B) color channels associated with an RGB color space. More specifically, the OETF 114 converts RGB information from an analog domain to a digital domain. For example, the OETF 114 may convert the analog electrical signals Ec to digital R, G, and B values representing the primary color components associated with the sensor 112.

The CSC 116 changes the color space associated with the coded image data RGBc. In some aspects, the CSC 116 may convert the coded image data RGBc from the RGB color space to another color space that may be easier for the encoder 118 to compress or otherwise encode for transmission to the display device 130 (such as a YUV color space). In some implementations, the CSC 116 may convert the coded image data RGBc to image data (YUVc) having luma (Y) and chrominance (UV) channels associated with a YUV color space. The encoder 118 encodes the converted image data YUVc, as image capture data 102, for transmission to the image processor 120 or the display device 130. For example, the encoder 118 may apply data compression or signal modulation to the converted image data YUVc based, at least in part, on various communication standards or protocols supported by the communication medium (not shown for simplicity) or the display device 130.

The image processor 120 processes the image capture data 102 to produce display data 103 that can be used to more accurately or realistically reproduce the original scene light 101 on the display device 130 (given the differences in dynamic range or color gamut supported by the image capture device 110 and the display device 130). For example, display devices that are capable of displaying only standard dynamic range (SDR) content may be unable to reproduce the full range of color, brightness, or contrast of images captured in a high dynamic range (HDR) format. On the other hand, images captured in an SDR format may not utilize the full range of color, brightness, or contrast supported by display devices that are capable of displaying HDR content. Accordingly, the image processor 120 may bridge the image capture capabilities of the image capture device 110 and the image display capabilities of the display device 130. In some aspects, the image processor 120 may be incorporated in the image capture device 110. In some other aspects, the image processor 120 may be incorporated in the image display device 130.

The display device 130 includes a decoder 132, a CSC 134, an electro-optical transfer function (EOTF) 136, and a display 138. The decoder 132 receives the display data 103 from the image processor 120 and decodes the received data to recover display data (YUVo) having Y, U, and V channels associated with a YUV color space. In some implementations, the decoder 132 may reverse the encoding performed by the encoder 118 of the image capture device 110. The CSC 134 changes the color space associated with the recovered image data YUVo. In some aspects, the CSC 134 may convert the recovered image data YUV_{D} from the YUV color space to another color space that is used by the display 138 for rendering and displaying images (such as an RGB color space). In some implementations, the CSC 134 may convert the image data YUVo to image data (RGBo) having R, G, and B color channels associated with an RGB color space.

The EOTF 136 transforms the converted image data RGBo to an electrical signal (E_{D}) that can be used to illuminate the pixels of the display 138. More specifically, the EOTF 136 converts RGB information from a digital domain to an analog domain. For example, the EOTF 136 may convert the digital image data RGB_{D} to analog brightness values (or "nits") associated with the display 138. The display 138 converts the electrical signal E_{D} to the display light 104. For example, the display 138 may include an array of pixel elements each configured to display a respective pixel of the corresponding image (such as using cathode ray tube (CRT), liquid crystal display (LCD), organic light emitting diode (OLED), or other display technologies). More specifically, the color and brightness of light output by each pixel element may be defined or otherwise indicated by the characteristics of the electrical signal E_{D}.

The OETF 114 of the image capture device 110 performs a nonlinear transformation on the electrical signal Ec. More specifically, the OETF 114 transfers the electrical signal Ec from a linear domain to a nonlinear domain. As a result, the image capture data 102 received by the image processor 120 is nonlinear. Aspects of the present disclosure recognize that many image processing operations are more complex to perform on nonlinear image data than on linear image data. Thus, in some aspects, the image processor 120 may include an inverse opto-electrical transfer function (IOETF) 122, a color volume mapping (CVM) component 123, and an inverse electro-optical transfer function (IEOTF) 124. The IOETF 122 transfers the image capture data 102 back to the linear domain for processing as display data 103. Thus, the IOETF 122 may be the inverse of the OETF 114. The IEOTF 124 transfers the display data 103 back to the nonlinear domain for display by the display device 130. Thus, the IEOTF 124 may be the inverse of the EOTF 136.

The CVM component 123 is configured to map the linear image capture data 102 to the linear display data 103. In some implementations, the CVM component 123 may reduce the color, brightness, or contrast of an HDR image for display on an SDR display device (also referred to as "tone mapping"). In some other implementations, the CVM component 123 may increase the color, brightness, or contrast of an SDR image for display on an HDR display device (also referred to as "inverse tone mapping"). Still further, in some implementations, the CVM component 123 may adjust the color, brightness, or contrast of an HDR image data for display on an HDR display device (such as to compensate for differences in dynamic range or color gamut supported by the image source and the image target).

As described above, the image capture data 102 is encoded based on the converted image data YUVc having Y, U, and V color channels. As such, the image capture data 102 is also associated with the YUV color space. However, the YUV color space is not a perceptually uniform color space. As such, the brightness, saturation and hue planes are not orthogonal to each other. In other words, changing the luminance range will result in varied amounts of changes in saturation for different hue colors. Similarly, changing the saturation range will result in varied amounts of changes in luminance level for different colors. Thus, performing tone mapping or inverse tone mapping in the YUV color space is more prone to artifacts and may impose a significant penalty on latency, memory, and processing resources, which may not be suitable for many image processing applications (such as for processing video or for implementation in battery-powered devices or other edge devices with limited resources).

Aspects of the present disclosure recognize that image processing overhead can be significantly reduced, without loss of accuracy, by performing tone mapping and inverse tone mapping operations in a perceptually uniform color space (UCS) such as, for example, the J_{z}a_{z}b_{z} color space which is defined by lightness (J_{z}), redness-greenness (a_{z}), and yellowness-blueness (b_{z}) color components. In some aspects, the image processor 120 may convert the image capture data 102 to the J_{z}a_{z}b_{z} color space for image processing. More specifically, the image processor 120 may convert the Y, U, and V channels of the image capture data 102 to J_{z}, a_{z}, and b_{z} channels associated with the J_{z}a_{z}b_{z} color space. The CVM component 123 may further map the J_{z}, a_{z}, and b_{z} channels of the image capture data 102 to J_{z}, a_{z}, and b_{z} channels of the display data 103 based on the dynamic range or color gamut supported by each of the image capture device 110 and the display device 130.

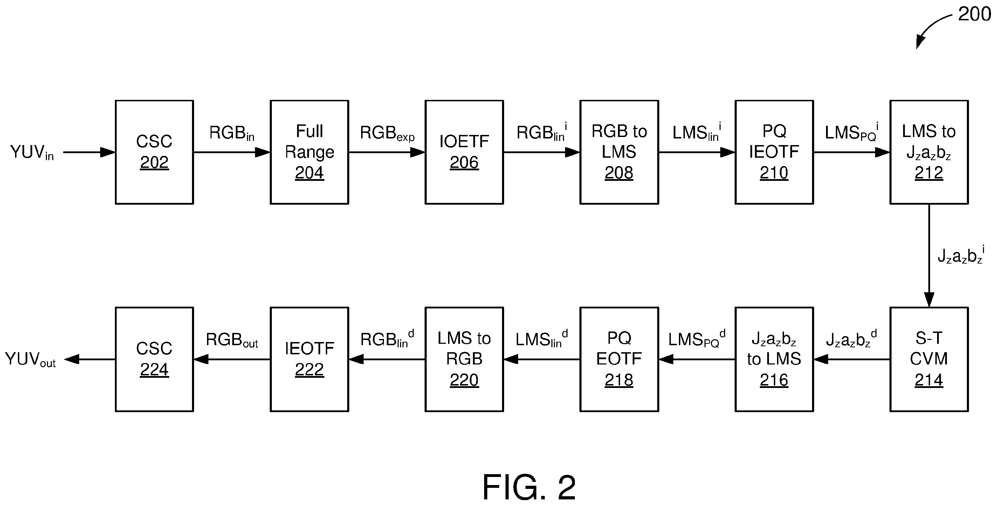

FIG. 2 shows a block diagram of an example image processing system 200, according to some implementations. The image processing system 200 is configured to convert image data (YUVᵢₙ) captured by a source device (such as an image capture device) to display data (YUVₒᵤₜ) for display by a target device (such as a display device). In some implementations, the image processing system 200 may be one example of the CVM component 123 of FIG. 1. With reference for example to FIG. 1, the image data YUVᵢₙ may be one example of the image capture data 102 and the display data YUVₒᵤₜ may be one example of the display data 103.

The image processing system 200 includes a color-space converter (CSC) 202, a full-range expander 204, an IOETF 206, an RGB to long, medium, short (LMS) CSC 208, a perceptual quantizer (PQ) IEOTF 210, an LMS to J_{z}a_{z}b_{z} CSC 212, a source-to-target (S-T) color volume mapper (CVM) 214, a J_{z}a_{z}b_{z} to LMS CSC 216, a PQ EOTF 218, an LMS to RGB CSC 220, an IEOTF 222, and a CSC 224. The CSC 202 converts the received image data YUVᵢₙ to image data (RGBᵢₙ) having R, G, and B color channels associated with an RGB color space. In some implementations, the CSC 202 may convert the received image data YUVᵢₙ from a YUV color space to the RGB color space. In some other implementations, the image processing system 200 may directly receive the image data RGBᵢₙ in the RGB color space. In such implementations, the CSC 202 may be bypassed or omitted from the image processing system 200.

The full-range expander 204 expands the maximum range of the converted image data RGBᵢₙ to produce expanded image data (RGBₑₓₚ). For example, the range of digital YUV values may be limited between an artificial minimum ("min") and an artificial maximum ("max") in order to reserve some codes for timing reference purposes. Thus, if the received image data YUVᵢₙ has been limited (such as between 256 and 3760, in the 12-bit range), then a full-range expansion may cause the expanded image data RGBₑₓₚ to fall within a predetermined maximum range (such as between 0 and 4095) associated with the RGB color space. When the received image data YUVᵢₙ is converted to the RGB color space, the range of values associated with the converted image data RGBᵢₙ may remain the same. Thus, each of the R, G, and B components may be expanded using only a limited set of parameters.

The IOETF 206 transforms the expanded image data RGBₑₓₚ into linearly-interpolated image data (RGBₗᵢₙⁱ). In some implementations, the IOETF 206 may be the inverse of an OETF implemented by the source device. With reference for example to FIG. 1, the IOETF 206 may be one example of the IOETF 122 of the image processor 120. Thus, the IOETF 206 may be the inverse of the OETF 114 of the image capture device 110. To achieve a high precision IOETF curve while reducing the memory requirements for lookup table (LUT) storage, the IOETF 206 may use a 128 segmented piecewise linear interpolation technique to convert 16-bit RGB components to 32-bit RGB components in the linear domain.

The RGB to LMS CSC 208 converts the linear image data RGBₗᵢₙⁱ to image data (LMSₗᵢₙⁱ) having long (L), medium (M), and short (S) channels associated with an LMS color space. The L, M, and S channels represent the responses of the three types of cones in the human eye. Thus, the converted image data LMSₗᵢₙⁱ also may be referred to herein as "perceptual image data." In some implementations, the RGB to LMS CSC 208 may convert the linear image data RGBₗᵢₙⁱ to the perceptual image data LMSₗᵢₙⁱ through intermediate conversion to a tristimulus (XYZ) space defined by the Commission Internationale de l'Eclairage (CIE): $\left[\begin{matrix}{X}_{D 65}^{′} \\ {Y}_{D 65}^{′}\end{matrix}\right] = \left[\begin{matrix}{bX}_{D 65} \\ {gY}_{D 65}\end{matrix}\right] - \left[\begin{matrix}\left(b-1\right) {Z}_{D 65} \\ \left(g-1\right) {X}_{D 65}\end{matrix}\right]$ $\left[\begin{matrix}L \\ M \\ S\end{matrix}\right] = \left[\begin{matrix}0.41478972 & 0.579999 & 0.0146488 \\ - 0.2015100 & 1.120649 & 0.0531008 \\ - 0.0166008 & 0.264800 & 0.6684799\end{matrix}\right] \left[\begin{matrix}{X}_{D 65}^{′} \\ {Y}_{D 65}^{′} \\ {Z}_{D 65}\end{matrix}\right]$ where *X*_{*D*65}, *Y*_{*D*65}, and *Z*_{*D*65} belong to the CIE XYZ tristimulus space with CIE standard illuminant D65 as white point, b = 1.15, and *g* = 0.66. Aspects of the present disclosure recognize that any RGB color space can be transformed to the CIE XYZ tristimulus space. Thus, the transformation matrix that is used to transform the image data from the RGB color space to the XYZ color space may depend on the RGB color space implemented by the image processing system 200.

The PQ IEOTF 210 transforms the perceptual image data LMSₗᵢₙⁱ from the linear domain to the PQ domain. The PQ IEOTF 210 is a nonlinear transfer function adopted by Society of Motion Picture and Television Engineers (SMPTE) and International Telecommunication Union (ITU) standards for HDR display. For example, the PQ domain supports luminance levels in the range of 0.0001 to 10000 nits. Thus, the PQ IEOTF 210 may transform the L, M, and S channels of the perceptual image data LMSₗᵢₙⁱ into L', M', and S' channels of PQ image data (LMS_{PQ}ⁱ): $\left\{L′, M′, S′\right\} = {\left(\frac{{c}_{1} + {c}_{2} {\left(\frac{\left\{L, M, S\right\}}{10000}\right)}^{n}}{1 + {c}_{3} {\left(\frac{\left\{L, M, S\right\}}{10000}\right)}^{n}}\right)}^{p}$ where *c*₁ = 3424/2¹², *c*₂ = 2413/2⁷, *c*₃ = 2392/2⁷, *n* = 2610/2¹⁴, and p = 1.7 x 2523/2⁵.

The LMS to J_{z}a_{z}b_{z} CSC 212 converts the PQ image data LMS_{PQ}ⁱ to image data (J_{z}a_{z}b_{z}ⁱ) having lightness (J_{z}), redness-greenness (a_{z}), and yellowness-blueness (b_{z}) channels associated with a J_{z}a_{z}b_{z} color space. As described with reference to FIG. 1, the J_{z}a_{z}b_{z} color space is a perceptually uniform. Thus, the converted image data J_{z}a_{z}b_{z}ⁱ also may be referred to herein as "perceptually uniform image data." In some implementations, the LMS to J_{z}a_{z}b_{z} CSC 212 may convert the PQ image data LMS_{PQ}ⁱ to the perceptually uniform image data J_{z}a_{z}b_{z}ⁱ according to Equations 1 and 2, below: $\left[\begin{matrix}{I}_{z} \\ {a}_{z} \\ {b}_{z}\end{matrix}\right] = \left[\begin{matrix}0.5 & 0.5 & 0 \\ 3.524000 & - 4.066708 & 0.542708 \\ 0.199076 & 1.096799 & - 1.295875\end{matrix}\right] \left[\begin{matrix}L ′ \\ M ′ \\ S ′\end{matrix}\right]$ (1) ${J}_{z} = \frac{\left(1+d\right) {I}_{z}}{1 + {dI}_{z}} - {d}_{0}$ (2) where d = -0.56 and *d*₀ = 1.6295499532821566 x 10⁻¹¹.

The S-T CVM 214 is configured to map the perceptually uniform image data J_{z}a_{z}b_{z}ⁱ to perceptually uniform display data (J_{z}a_{z}b_{z}^{d}) that is better suited for presentation on the target device. More specifically, the S-T CVM 214 may map the range of J_{z}, a_{z}, and b_{z} values supported by the source device to a range of J_{z}, a_{z}, and b_{z} values supported by the target device. In some implementations, the S-T CVM 214 may reduce the dynamic range associated with the perceptually uniform image data J_{z}a_{z}b_{z}ⁱ by mapping the J_{z} channel of J_{z}a_{z}b_{z}ⁱ to a narrower range of J_{z} values (also referred to as "tone mapping"). In some other implementations, the S-T CVM 214 may increase the dynamic range associated with the perceptually uniform image data J_{z}a_{z}b_{z}ⁱ by mapping the J_{z} channel of J_{z}a_{z}b_{z}ⁱ to a wider range of J_{z} values (also referred to as "inverse tone mapping").

In some implementations, the S-T CVM 214 may reduce the color gamut associated with the perceptually uniform image data J_{z}a_{z}b_{z}ⁱ by mapping the a_{z} and b_{z} channels of J_{z}a_{z}b_{z}ⁱ to a narrower range of a_{z} and b_{z} values (also referred to as "saturation mapping"). In some implementations, the S-T CVM 214 may increase the color gamut associated with the perceptually uniform image data J_{z}a_{z}b_{z}ⁱ by mapping the a_{z} and b_{z} channels of J_{z}a_{z}b_{z}ⁱ to a wider range of a_{z} and b_{z} values (also referred to as "inverse saturation mapping"). Because the J_{z} channel is orthogonal to the a_{z} and b_{z} channels, the S-T CVM 214 can adjust the tone (or J_{z} channel) of the perceptually uniform image data J_{z}a_{z}b_{z}ⁱ without affecting the saturation of the image. The S-T CVM 214 can also adjust the saturation (or a_{z} and b_{z} channels) of the perceptually unform image data J_{z}a_{z}b_{z}ⁱ without affecting the image tone.

The J_{z}a_{z}b_{z} to LMS CSC 216 converts the perceptually uniform display data J_{z}a_{z}b_{z}^{d} to perceptual display data (LMS_{PQ}^{d}) having L', M', and S' channels associated with the LMS color space. More specifically, the J_{z}a_{z}b_{z} to LMS CSC 216 may reverse the color-space conversion performed by the LMS to J_{z}a_{z}b_{z} CSC 212. In some implementations, the J_{z}a_{z}b_{z} to LMS CSC 216 may convert the perceptually uniform display data J_{z}a_{z}b_{z}^{d} to the perceptual display data LMS_{PQ}^{d} according to equations 3 and 4, below: ${I}_{z} = \frac{{J}_{z} + {d}_{0}}{1 + d - d \left({J}_{z}+{d}_{0}\right)}$ (3) $\left[\begin{matrix}L ′ \\ M ′ \\ S ′\end{matrix}\right] = {\left[\begin{matrix}0.5 & 0.5 & 0 \\ 3.524000 & - 4.066708 & 0.542708 \\ 0.199076 & 1.096799 & - 1.295875\end{matrix}\right]}^{- 1} \left[\begin{matrix}{I}_{z} \\ {a}_{z} \\ {b}_{z}\end{matrix}\right]$ (4) where d = -0.56 and *d*₀ = 1.6295499532821566 x 10⁻¹¹.

The PQ EOTF 218 transforms the perceptual display data LMS_{PQ}^{d} from the PQ domain back to the linear domain. More specifically, the PQ EOTF 218 may be the inverse of the PQ IEOTF 210. Thus, the PQ EOTF 218 may transform the L', M', and S' channels of the perceptual display data LMS_{PQ}^{d} into L, M, and S channels of linear display data (LMSₗᵢₙ^{d}): $\left\{L, M, S\right\} = 10000 ∗ {\left(\frac{{c}_{1} - {\left(\left\{L′, M′, S′\right\}\right)}^{\frac{1}{p}}}{{c}_{3} {\left(\left\{L′, M′, S′\right\}\right)}^{\frac{1}{p}} - {c}_{2}}\right)}^{\frac{1}{n}}$ where *c*₁ = 3424/2¹², *c*₂ = 2413/2⁷, *c*₃ = 2392/2⁷, *n* = 2610/2¹⁴, and p = 1.7 x 2523/2⁵.

The LMS to RGB CSC 220 converts the linear display data LMSₗᵢₙ^{d} to display data (RGBₗᵢₙ^{d}) having R, G, and B channels associated with the RGB color space. More specifically, the LMS to RGB CSC 220 may reverse the color-space conversion performed by the RGB to LMS CSC 208. In some implementations, the LMS to RGB CSC 220 may convert the linear display data LMSₗᵢₙ^{d} to the display data RGBₗᵢₙ^{d} through intermediate conversion to the CIE XYZ tristimulus space: $\left[\begin{matrix}{X}_{D 65}^{′} \\ {Y}_{D 65}^{′} \\ {Z}_{D 65}\end{matrix}\right] = {\left[\begin{matrix}0.41478972 & 0.579999 & 0.0146480 \\ - 0.2015100 & 1.120649 & 0.0531008 \\ - 0.0166008 & 0.264800 & 0.6684799\end{matrix}\right]}^{- 1} \left[\begin{matrix}L \\ M \\ S\end{matrix}\right]$ ${X}_{D 65} = \frac{{X}_{D 65}^{′} + \left(b-1\right) {Z}_{D 65}}{b}$ ${Y}_{D 65} = \frac{{Y}_{D 65}^{′} + \left(g-1\right) {X}_{D 65}}{g}$ where b = 1.15 and *g* = 0.66. Aspects of the present disclosure recognize that the CIE XYZ tristimulus space can be transformed to any RGB color space. Thus, the transformation matrix that is used to transform the display data from the XYZ color space to the RGB color space may depend on the RGB color space implemented by the image processing system 200.

The IEOTF 222 transforms the converted display data RGBₗᵢₙ^{d} into nonlinear display data (RGBₒᵤₜ). In some implementations, the IEOTF 222 may be the inverse of an EOTF implemented by the target device. With reference for example to FIG. 1, the IEOTF 222 may be one example of the IEOTF 124 of the image processor 120. Thus, the IEOTF 222 may be the inverse of the EOTF 136 of the image capture device 130. To achieve a high precision IEOTF curve while reducing the memory requirements for LUT storage, the IEOTF 222 may use a 128 segmented piecewise linear interpolation technique to convert 32-bit RGB components to 16-bit RGB components in the nonlinear domain.

The CSC 224 converts the nonlinear display data RGBₒᵤₜ to the display data (YUVₒᵤₜ) for output to the target device. More specifically, the CSC 224 may reverse the color-space conversion performed by the CSC 202. In some implementations, the CSC 224 may convert the display data RGBₒᵤₜ from the RGB color space to the YUV color space. In some other implementations, the image processing system 200 may directly output the nonlinear display data RGBₒᵤₜ in the RGB color space. In such implementations, the CSC 224 may be bypassed or omitted from the image processing system 200.

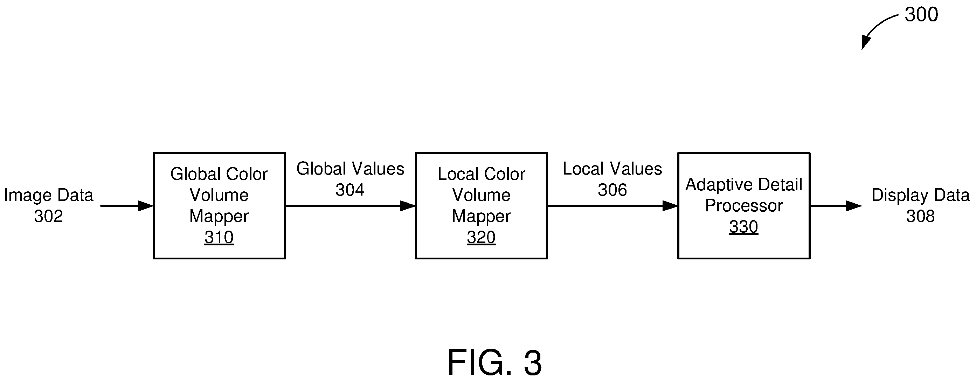

FIG. 3 shows a block diagram of an example CVM system 300, according to some implementations. The CVM system 300 is configured to transform image data 302 representing an image captured by a source device into display data 308 that can be used to reproduce the image at a display device. In some implementations, the CVM system 300 may be one example of the CVM component 123 of FIG. 1 or the S-T CVM 214 of FIG. 2. With reference for example to FIG. 2, the image data 302 may be one example of the perceptually uniform image data J_{z}a_{z}b_{z}ⁱ and the display data 308 may be one example of the perceptually uniform display data J_{z}a_{z}b_{z}^{d}. Thus, each of the image data 302 and the display data 308 includes J_{z}, a_{z}, and b_{z} channels associated with the J_{z}a_{z}b_{z} color space.

The CVM system 300 includes a global color volume mapper 310, a local color volume mapper 320, and an adaptive detail processor 330. The global color volume mapper 310 is configured to map the received image data 302 to a set of global color values 304 associated with the J_{z}a_{z}b_{z} color space based on the dynamic range and color gamut supported by each of the source device and the target device. For example, the range of J_{z} values that can be included in the image data 302 is bounded or limited by the dynamic range of the source device and the range of a_{z} and b_{z} values that can be included in the image data 302 is bounded or limited by the color gamut of the source device. By contrast, the range of J_{z} values that can be included among the global color values 304 is bounded or limited by the dynamic range of the target device and the range of a_{z} and b_{z} values that can be included among the global color values 304 is bounded or limited by the color gamut supported of target device.

In some aspects, the global color volume mapper 310 may map the range of J_{z}, a_{z}, and b_{z} values supported by the source device to the range of J_{z}, a_{z}, and b_{z} values supported by the target device (such as through expansion or compaction of each range of values) and may determine the set of global color values 304 based on the "global" mapping between the source device and the target device. In some implementations, the global color volume mapper 310 may map the J_{z} channels of the image data 302 to the J_{z} channels of the global color values 304 based on a tone mapping operation or an inverse tone mapping operation. In some other implementations, the global color volume mapper 310 may map the a_{z} and b_{z} channels of the image data 302 to the a_{z} and b_{z} channels of the global color values 304 based on a saturation mapping operation or an inverse saturation mapping operation.

The local color volume mapper 320 is configured to remap the set of global color values 304 to a set of local color values 306 based on various properties of the corresponding image. Aspects of the present disclosure recognize that the human visual system can perceive more details in darker and brighter regions of an image compared to the mid-tones. However, some image details may fade in the darker or brighter regions of the image as a result of mapping the J_{z} channel of the image data 302 to the J_{z} channel of the global color values 304 through global expansion (or compaction) of the dynamic range. In some aspects, the local color volume mapper 320 may dynamically tune the global color values 304 so that details are preserved in the darker and brighter regions of the image. For example, the J_{z} channel of the local color values 306 may span a wider range of dark tones than mid-tones and may span the widest range of bright (or "highlight") tones.

Aspects of the present disclosure also recognize that a global expansion of saturation values may not produce optimized colors for various objects in any given scene. More specifically, different levels of saturation may be more aesthetically pleasing to the human eye for different types of content. For example, bluer skies and greener grass may be visually appealing in the context of an outdoor sports scene but may be distracting in the context of a movie scene (for at least some genres of film). In some aspects, the local color volume mapper 320 may dynamically tune the global color values 304 based on contextual information about the image. For example, the local color volume mapper 320 may determine a classification associated with various objects or features in the image and may remap the a_{z} and b_{z} channels of the global color values 304 to a_{z} and b_{z} channels of the local color values based on the determined classifications.

The adaptive detail processor 330 may further remap the local color values 306 to the display data 308 based on details detected in the corresponding image. Aspects of the present disclosure recognize that, as a result of expanding the dark and highlight tones, high-frequency details may become lost in low-contrast regions of the image depicted by the local color values 306. For example, individual blades of grass on a football field may be difficult to discern due to the stretching of tones at the edges of the grass. In some aspects, the adaptive detail processor 330 may adaptively tune the local color values 306 so that high-frequency details are preserved in low-contrast regions of the image depicted by the display data 308. More specifically, the adaptive detail processor 330 may detect the edges of objects or features in the image and adaptively blend the J_{z} channel of the local color values 306 at the detected edges based on the contrast of the surrounding region.

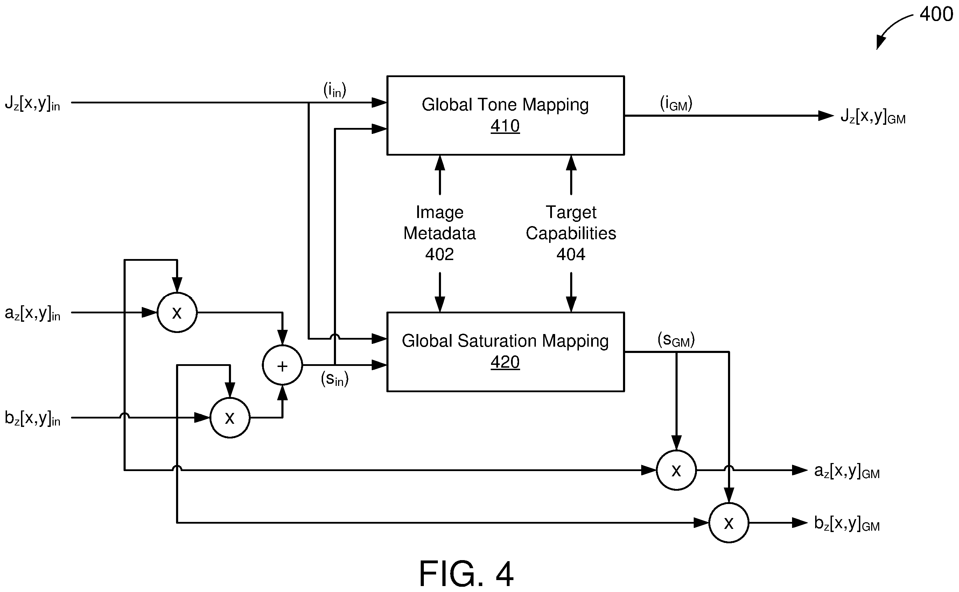

FIG. 4 shows a block diagram of an example system 400 for global CVM, according to some implementations. The system 400 is configured to map J_{z}, a_{z}, and b_{z} channels of image data ({J_{z}[x,y]ᵢₙ, a_{z}[x,y]ᵢₙ, b_{z}[x,y]ᵢₙ}, where x and y denote horizontal and vertical pixel coordinates) to J_{z}, a_{z}, and b_{z} channels of global display data ({J_{z}[x,y]_{GM}, a_{z}[x,y]_{GM}, b_{z}[x,y]_{GM}}). In some implementations, the system 400 may be one example of the global color volume mapper 310 of FIG. 3. With reference for example to FIG. 3, the image data {J_{z}[x,y]ᵢₙ, a_{z}[x,y]ᵢₙ, b_{z}[x,y]ᵢₙ} may be one example of the image data 302 and the display data {J_{z}[x,y]_{GM}, a_{z}[x,y]_{GM}, b_{z}[x,y]_{GM}} may be one example of the global color values 304.

The system 400 includes a global tone mapping component 410 and a global saturation mapping component 420. In some aspects, the system 400 may convert the image data {J_{z}[x,y]ᵢₙ, a_{z}[x,y]ᵢₙ, b_{z}[x,y]ᵢₙ} to intensity (iᵢₙ) and saturation (sᵢₙ) values, where iᵢₙ = J_{z}[x,y]ᵢₙ and sᵢₙ = a_{z}[xy]ᵢₙ*b_{z}[x,y]ᵢₙ. The global tone mapping component 410 is configured to map the iᵢₙ and sᵢₙ values to a global intensity value (i_{GM}) based on source image metadata 402 associated with the received image data and target capabilities 404 associated with the target device. The global saturation mapping component 420 is configured to map the iᵢₙ and sᵢₙ values to a global saturation value (s_{GM}) based on the image metadata 402 and the target capabilities 404.

The target capabilities 404 may include any known capabilities of the target device such as, for example, a dynamic range or color gamut supported by the target device. By contrast, the source image metadata 402 may be received with the image data and may indicate a dynamic range or color gamut of a mastering display (used to author or "master" the image data). Example suitable metadata may include color calibration data associated with the mastering display, a maximum frame average light level (MaxFALL), a maximum content light level (MaxCLL), RGB primaries, white point, or display maximum and minimum light levels, among other examples. In some implementations, the source image metadata 402 may include static metadata that is broadly applicable to a series of images (or multiple frames of video). In some other implementations, the source image metadata 402 may include dynamic metadata that is specific to the received image data.

In some implementations, the global tone mapping component 410 may map the iᵢₙ and sᵢₙ values to an i_{GM} value based on a source to target tone mapping operator in intensity axis (TI) lookup table (LUT) and a source to target tone mapping operator in saturation axis (TS) LUT. Because the J_{z}a_{z}b_{z} color space is a perceptually uniform color space and the J_{z} channel is perfectly orthogonal to the a_{z} and b_{z} channels, the color volume mapping operation is isotropic and can be implemented by one-dimensional (1D) LUTs associated with each tone and saturation axis. For example, the global tone mapping component 410 may look up the tone map for the intensity value iᵢₙ in the TI LUT and may look up the tone map for the saturation value sᵢₙ in the TS LUT, where the TI and TS LUTs are 1D LUTs and where i_{GM} = TI[iᵢₙ]*TS[sᵢₙ]. In some implementations, the global tone mapping component 410 may determine or generate the TI LUT and the TS LUT based on the source image metadata 402, the target capabilities 404, or any combination thereof. In some aspects, the system 400 may further convert the global intensity value i_{GM} to the J_{z} channel of the global display data, where J_{z}[x,y]_{GM} = i_{GM}.

In some implementations, the global saturation mapping component 420 may map the iᵢₙ and sᵢₙ values to an s_{GM} value based on a source to target color saturation mapping operator in intensity axis (SI) LUT and a source to target color saturation mapping operator in saturation axis (SS) LUT. Because the J_{z}a_{z}b_{z} color space is a perceptually uniform color space, the global saturation mapping operation is isotropic in nature, and requires only 1D operators associated with each intensity and saturation axis. For example, the global saturation mapping component 420 may look up the saturation mapping for the intensity value iᵢₙ in the SI LUT and may look up the saturation mapping for the saturation value sᵢₙ in the SS LUT, where the SI and SS LUTs are 2D LUTs and where s_{GM} = SI[iᵢₙ]*SS[sᵢₙ]. In some implementations, the global saturation mapping component 420 may determine or generate the SI LUT and the SS LUT based on the source image metadata 402, the target capabilities 404, or any combination thereof. In some aspects, the system 400 may further convert the global saturation value s_{GM} to the a_{z} and b_{z} channels of the global display data, where a_{z}[xy]_{GM} = a_{z}[xy]ᵢₙ*s_{GM} and b_{z}[x,y]_{GM} = b_{z}[x,y]ᵢₙ*s_{GM}.

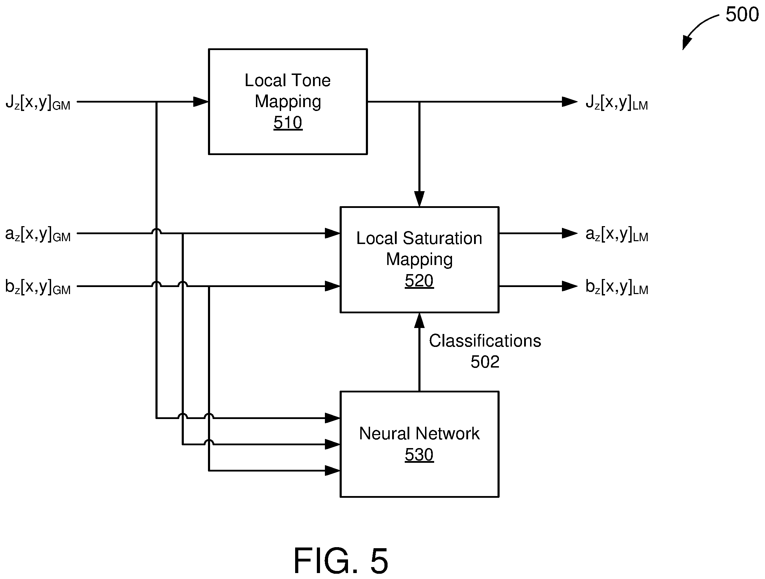

FIG. 5 shows a block diagram of an example system 500 for local CVM, according to some implementations. The system 500 is configured to map J_{z}, a_{z}, and b_{z} channels of global display data ({J_{z}[x,y]_{GM}, a_{z}[x,y]_{GM}, b_{z}[x,y]_{GM}}) to J_{z}, a_{z}, and b_{z} channels of local display data ({J_{z}[x,y]_{LM}, a_{z}[x,y]_{LM}, b_{z}[x,y]_{LM}}). In some implementations, the system 500 may be one example of the local color volume mapper 320 of FIG. 3. With reference for example to FIG. 3, the global display data {J_{z}[x,y]_{GM}, a_{z}[x,y]_{GM}, b_{z}[x,y]_{GM}} may be one example of the global color values 304 and the local display data {J_{z}[x,y]_{LM}, a_{z}[x,y]_{LM}, b_{z}[x,y]_{LM}} may be one example of the local color values 306.

The system 500 includes a local tone mapping component 510 and a local saturation mapping component 520. The local tone mapping component 510 is configured to map the J_{z} channel of the global display data J_{z}[x,y]_{GM} to the J_{z} channel of the local display data J_{z}[x,y]_{LM}. In some aspects, the local tone mapping component 510 may perform the mapping based, at least in part, on a distribution of the values of J_{z}[x,y]_{GM}. More specifically, the mapping may improve the contrast of the image while preserving details in the darker and brighter regions of the image. In some implementations, the local tone mapping component 510 may perform histogram equalization on the J_{z} channel of the global display data J_{z}[x,y]_{GM}. Histogram equalization is a technique for increasing the contrast of an image by spreading out or redistributing a relatively narrow range of tone values over a wider range.

Aspects of the present disclosure recognize that the human visual system can perceive more details in darker and brighter regions of an image compared to the mid-tones. Thus, in some implementations, the local tone mapping component 510 may perform histogram equalization on independent bands of tones. As used herein, a "band" refers to a range of tones that does not overlap with any other band. For example, each tone value associated with the J_{z} channel of the global display data J_{z}[x,y]_{GM} may fall within a spectrum that is partitioned or subdivided into "dark," "mid," and "highlight" bands. The local tone mapping component 510 may perform a separate histogram equalization operation on the tone values within each of the dark, mid, and highlight bands so that the tone values in a given band do not cross over to another band as a result of the histogram equalization.

The local saturation mapping component 520 is configured to map the a_{z} and b_{z} channels of the global display data a_{z}[x,y]_{GM} and b_{z}[x,y]_{GM} to the a_{z} and b_{z} channels of the local display data a_{z}[x,y]_{LM} and b_{z}[x,y]_{LM}. Aspects of the present disclosure recognize that the brightness of an image may affect the perception of colors in the image. Thus, in some implementations, the local saturation mapping component 520 may perform the mapping based, at least in part, on the J_{z} channel of the local display data J_{z}[x,y]_{LM}. For example, the local saturation mapping component 520 may adjust the hue (*h_{z}*) or chroma (*C_{z}*) of a given pixel based on the value of J_{z}[x,y]_{LM}, where: ${h}_{z} = arctan \left(\frac{{b}_{z}}{{a}_{z}}\right)$ (5) ${C}_{z} = \sqrt{{a}_{z}^{2} + {b}_{z}^{2}}$ (6)

In some implementations, the local saturation mapping component 520 may further map the a_{z} and b_{z} channels of the global display data a_{z}[x,y]_{GM} and b_{z}[x,y]_{GM} to the a_{z} and b_{z} channels of the local display data a_{z}[x,y]_{LM} and b_{z}[x,y]_{LM} based, at least in part, on classifications 502 of one or more objects or features in the image. The classifications 502 provide contextual information about the objects or features that can be used to determine optimal colors for displaying such objects or features on the target device. For example, if the classification 502 associated with a particular object indicates that the object is a human face, the local saturation mapping component 520 may tune the hue *h_{z}* and chroma *C_{z}* of the object (using Equations 5 and 6) to match a skin tone that is known to appear more natural on the target device.

In some aspects, the classifications 502 may be inferred by a neural network 530. Example suitable neural networks may include various types of deep neural networks (DNNs), such as convolutional neural networks (CNNs) or recurrent neural networks (RNNs), among other examples. In some implementations, the neural network 530 may infer the classifications 502 based on one or more channels of the global display data {J_{z}[x,y]_{GM}, a_{z}[x,y]_{GM}, b_{z}[x,y]_{GM}} (such as shown in FIG. 5). In some other implementations, the neural network 530 may infer the classifications 502 based on other data associated with the image (not shown for simplicity). Example suitable data may include metadata (such as the image metadata 402 of FIG. 4) or image data from which the global display data is derived (such as the image data 302 of FIG. 3).

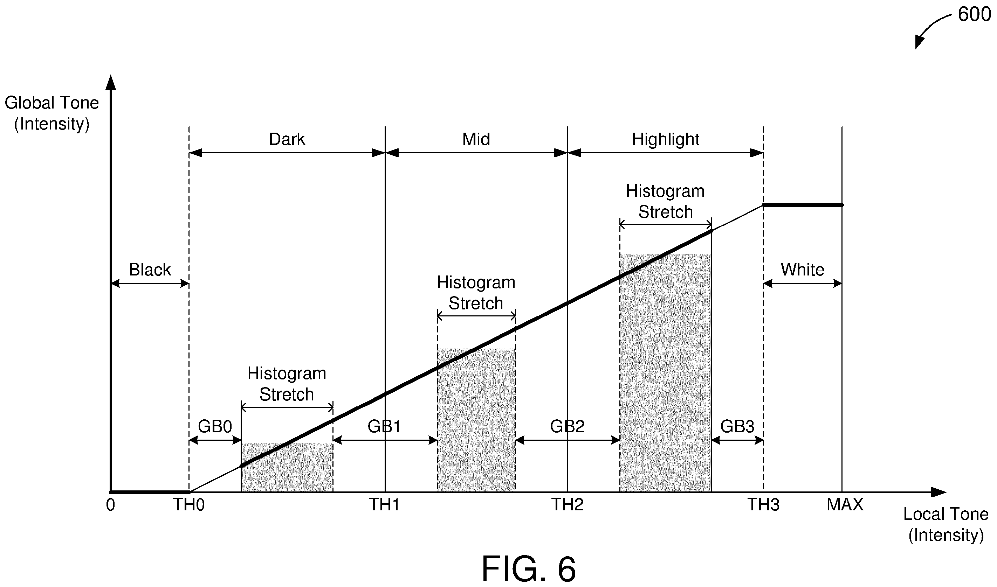

FIG. 6 shows an example mapping 600 of global pixel tone (or intensity) values to local pixel tone (or intensity) values with adaptive histogram equalization. In some implementations, the mapping 600 may be performed by the local tone mapping component 510 of FIG. 5. With reference for example to FIG. 5, the global pixel tone values may be one example of the J_{z} channel of the global display data J_{z}[x,y]_{GM} and the local pixel tone values may be one example of the J_{z} channel of the local display data J_{z}[x,y]_{LM}.

In the example of FIG. 6, global pixel tone values (such as the values of J_{z}[x,y]_{GM}) are depicted along a vertical axis and local pixel tone values (such as the values of J_{z}[x,y]_{LM}) are depicted along on a horizontal axis. The mapping 600 is represented by a curve that extends, along the horizontal axis, between a minimum intensity threshold (TH0) and a maximum intensity threshold (TH3). As shown in FIG. 6, the range of intensity values between TH0 and TH3 represents a spectrum that is subdivided into "dark," "mid," and "highlight" bands. More specifically, the dark band is bounded by the minimum intensity threshold TH0 and a first intensity threshold (TH1), the mid band is bounded by the first intensity threshold **TH1** and a second intensity threshold (TH2), and the highlight band is bounded by the second intensity threshold TH2 and the maximum intensity threshold TH3.

As described with reference to FIG. 5, the local tone mapping component 510 may perform histogram equalization on the global pixel tone values within each of the dark, mid, and highlight bands. In other words, the mapping 600 may redistribute or "stretch" the pixel tone values within each band. For example, within the dark band, the local tone mapping component 510 may remap the values of J_{z}[x,y]_{GM} so that the resulting values of J_{z}[x,y]_{LM} are more evenly distributed but remain bounded by the thresholds TH0 and TH1. Similarly, within the mid band, the local tone mapping component 510 may remap the values of J_{z}[x,y]_{GM} so that the resulting values of J_{z}[x,y]_{LM} are more evenly distributed but remain bounded by the thresholds TH1 and TH2. Also, within the highlight band, the local tone mapping component 510 may remap the values of J_{z}[x,y]_{GM} so that the resulting values of J_{z}[x,y]_{LM} are more evenly distributed but remain bounded by the thresholds TH2 and TH3.

In some implementations, guard bands may be used to maintain a sufficient amount of separation between the local pixel tone values in each of the dark, mid, and highlight bands (such as to avoid crushing pixel intensities as a result of histogram stretching). For example, a first guard band (GB0) provides a buffer between black pixel values and the next-darkest local pixel tone values; a second guard band (GB1) provides a buffer between the local pixel tone values in the dark band and the local pixel tone values in the mid band; a third guard band (GB2) provides a buffer between the local pixel tone values in the mid band and the local pixel tone values in the highlight band; and a fourth guard band (GB3) provides a buffer between white pixel values and the next-highest local pixel tone values.

Aspects of the present disclosure recognize that the human visual system can perceive more details in dark regions of an image compared to the mid-tones. Thus, in some implementations, the dark band may span a wider range of pixel intensities than the mid band (such that TH0-TH1 > TH1-TH2). As such, the dark band may support greater amounts of histogram stretching than in the mid band. Aspects of the present disclosure further recognize that the human visual system can perceive even more details in bright regions of an image compared to the dark regions. Thus, in some implementations, the highlight band may span a wider range of pixel intensities than the dark band (such that TH2-TH3 > TH0-TH1). As such, the highlight band may support greater amounts of histogram stretching than the dark band and the mid band.

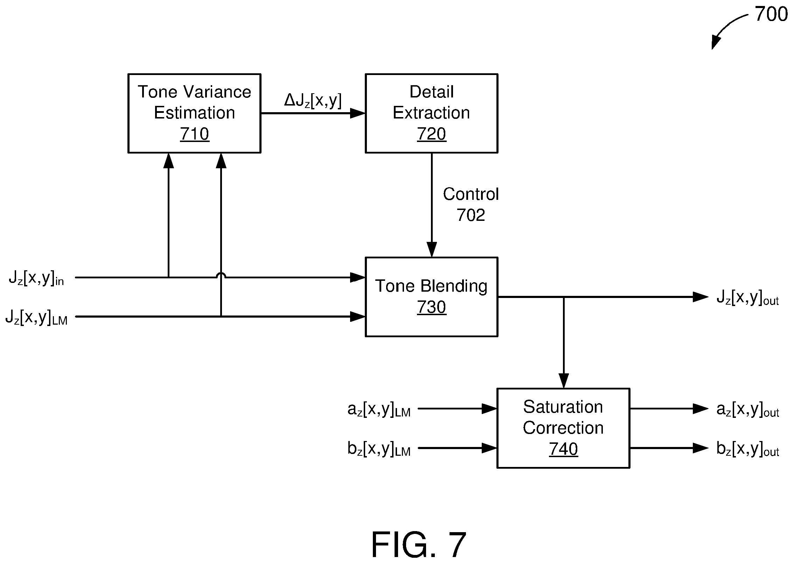

FIG. 7 shows a block diagram of an example system 700 for adaptive detail processing, according to some implementations. The system 700 is configured to map J_{z}, a_{z}, and b_{z} channels of local display data ({J_{z}[x,y]_{LM}, a_{z}[x,y]_{LM}, b_{z}[x,y]_{LM}}) to J_{z}, a_{z}, and b_{z} channels of output display data ({J_{z}[x,y]ₒᵤₜ, a_{z}[x,y]ₒᵤₜ, b_{z}[x,y]ₒᵤₜ}). In some implementations, the system 700 may be one example of the adaptive detail processor 330 of FIG. 3. With reference for example to FIG. 3, the local display data {J_{z}[x,y]_{LM}, a_{z}[x,y]_{LM}, b_{z}[x,y]_{LM}} may beone example of the local color values 306 and the output display data {J_{z}[x,y]ₒᵤₜ, a_{z}[x,y]ₒᵤₜ, b_{z}[x,y]ₒᵤₜ} may be one example of the display data 308.

The system 700 includes a tone variance estimation component 710, a detail extraction component 720, a tone blending component 730, and a saturation correction component 740. The tone variance estimation component 710 is configured to determine a difference (ΔJ_{z}[x,y]) between the J_{z} channel of the local display data J_{z}[x,y]_{LM} and the J_{z} channel of the original image data (J_{z}[x,y]ᵢₙ) from which the local display data is derived (where ΔJ_{z}[x,y] = |J_{z}[x,y]_{LM} - J_{z}[x,y]ᵢₙ|). For example, the original image data may be one example of the image data {J_{z}[x,y]ᵢₙ, a_{z}[x,y]ᵢₙ, b_{z}[x,y]ᵢₙ} of FIG. 4 or the image data 302 of FIG. 3.

The detail extraction component 720 is configured to detect edges or textures in the image based on the values of ΔJ_{z}[x,y]. In some aspects, the detail extraction component 720 may produce a control signal 702 based, at least in part, on the detected edges or textures. More specifically, the control signal 702 may indicate whether each pixel value is associated with a flat region or a textured region of the image. In some implementations, where a pixel value is associated with a textured region of the image, the control signal 702 may further indicate an amount of contrast associated with the textured region.

The tone blending component 730 is configured to produce the J_{z} channel of the output display data J_{z}[x,y]ₒᵤₜ based on the J_{z} channel of the image data J_{z}[x,y]ᵢₙ, the J_{z} channel of the local display data J_{z}[x,y]_{LM}, and the control signal 702. More specifically, each value of J_{z}[x,y]ₒᵤₜ may be a blend of a respective value of J_{z}[x,y]ᵢₙ and a respective value of J_{z}[x,y]_{LM}. In some implementations, the tone blending component 730 may control or adjust the amount of blending based on the control signal 702 to preserve high-frequency details in low-contrast regions of the image.

For example, the tone blending component 730 may refrain from blending the value of J_{z}[x,y]_{LM} with a respective value of J_{z}[x,y]ᵢₙ if the control signal 702 indicates that the pixel value is associated with a flat region of the image. As a result, the value of J_{z}[x,y]ₒᵤₜ may be equal to the value of J_{z}[x,y]_{LM} for pixel values associated with flat regions of the image (J_{z}[x,y]ₒᵤₜ = J_{z}[x,y]_{LM}). By contrast, the tone blending component 730 may blend the value of J_{z}[x,y]_{LM} with a respective value of J_{z}[x,y]ᵢₙ if the control signal 702 indicates that the pixel value is associated with a textured region of the image. As a result, the value of J_{z}[x,y]ₒᵤₜ may be a combination of the values of J_{z}[x,y]_{LM} and J_{z}[x,y]ᵢₙ for pixel values associated with texture regions of the image (J_{z}[x,y]ₒᵤₜ = αJ_{z}[x,y]_{LM} + βJ_{z}[x,y]ᵢₙ, where α and β depend on the amount of contrast in the region).

The saturation correction component 740 is configured to map the a_{z} and b_{z} channels of the local display data a_{z}[x,y]_{LM} and b_{z}[x,y]_{LM} to the a_{z} and b_{z} channels of the output display data a_{z}[x,y]ₒᵤₜ and b_{z}[x,y]ₒᵤₜ based on the J_{z} channel of the output display data J_{z}[x,y]ₒᵤₜ. As described with reference to FIG. 5, the brightness of an image may affect the perception of colors in the image. Thus, in some implementations, the local saturation mapping component 520 may adjust the hue *h_{z}* and chroma *C_{z}* of a given pixel (using Equations 5 and 6) to compensate for any changes made to the brightness of the pixel (such as by the tone blending component 730).

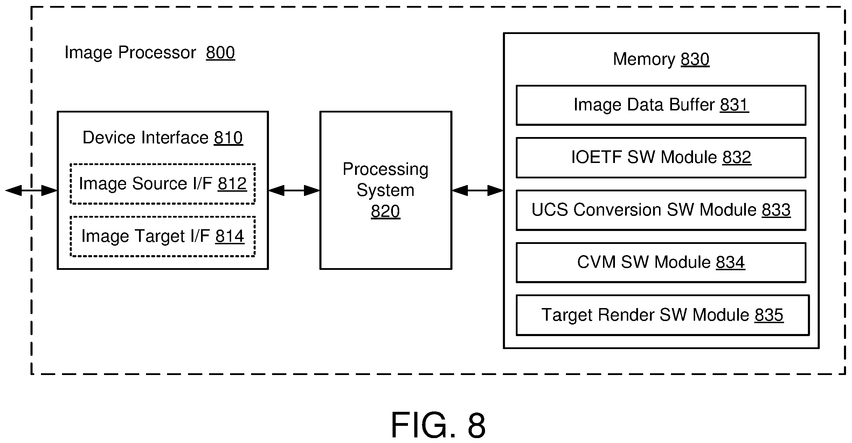

FIG. 8 shows another block diagram of an example image processing system 800, according to some implementations. The image processing system 800 is configured to convert image data captured by a source device (such as an image capture device) to display data for display by a target device (such as a display device). In some implementations, the image processing system 800 may be one example of the image processor 120 of FIG. 1 or the image processing system 200 of FIG. 2.

The image processing system 800 includes a device interface 810, a processing system 820, and a memory 830. The device interface 810 is configured to communicate with the source device and the target device. In some implementations, the device interface 810 may include an image source interface (I/F) 812 and an image target interface 814. The image source interface 812 is configured to receive the image data from the source device. In some implementations, the image source interface 812 may receive first image data representing an image produced by an image capture device based on an opto-electric transfer function (OETF). The image target interface 814 is configured to provide the display data to the target device.

The memory 830 includes an image data buffer 831 configured to store the received image data and any intermediate data resulting from the image processing operation. The memory 830 also includes a non-transitory computer-readable medium (including one or more nonvolatile memory elements, such as EPROM, EEPROM, Flash memory, or a hard drive, among other examples) that may store at least the following software (SW) modules:
- an inverse opto-electric transfer function (IOETF) SW module 832 to transform the first image data into second image data based on an inverse of the OETF associated with the image capture device, where the second image data includes red (R), green (G), and blue (B) channels associated with an RGB color space;
- a uniform color space (UCS) conversion SW module 833 to convert the second image data to third image data having lightness (J_{z}), redness-greenness (a_{z}), and yellowness-blueness (b_{z}) channels associated with a J_{z}a_{z}b_{z} color space;
- a color volume mapping (CVM) SW module 834 to map the J_{z}, a_{z}, and b_{z} channels of the third image data to J_{z}, a_{z}, and b_{z} channels of first display data based at least in part on a dynamic range or color gamut associated with a display device; and
- a target render SW module 835 to process the first display data for display by the display device.
Each software module includes instructions that, when executed by the processing system 820, causes the image processing system 800 to perform the corresponding functions.

The processing system 820 may include any suitable one or more processors capable of executing scripts or instructions of one or more software programs stored in the image processing system 800 (such as in the memory 830). For example, the processing system 820 may execute the IOETF SW module 832 to transform the first image data into second image data based on an inverse of the OETF associated with the image capture device, where the second image data includes R, G, and B channels associated with an RGB color space. The processing system 820 also may execute the UCS conversion SW module 833 to convert the second image data to third image data having J_{z}, a_{z}, and b_{z} channels associated with a J_{z}a_{z}b_{z} color space. The processing system 820 may further execute the CVM SW module 834 to map the J_{z}, a_{z}, and b_{z} channels of the third image data to J_{z}, a_{z}, and b_{z} channels of first display data based at least in part on a dynamic range or color gamut associated with a display device. Still further, the processing system 820 may execute the target render SW module 835 to process the first display data for display by the display device.

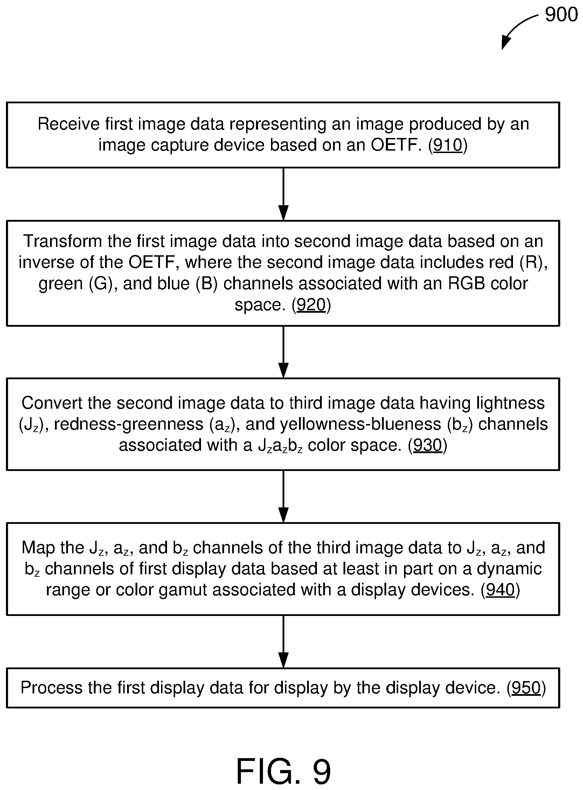

FIG. 9 shows an illustrative flowchart depicting an example operation 900 for image processing, according to some implementations. In some implementations, the example operation 900 may be performed by an image processing system (such as the image processor 120 of FIG. 1 or any of the image processing systems 200 or 800 of FIGS. 2 and 8, respectively).

The image processing system receives first image data representing an image produced by an image capture device based on an OETF (910). The image processing system transforms the first image data into second image data based on an inverse of the OETF, where the second image data includes red (R), green (G), and blue (B) channels associated with an RGB color space (920). The image processing system further converts the second image data to third image data having lightness (J_{z}), redness-greenness (a_{z}), and yellowness-blueness (b_{z}) channels associated with a J_{z}a_{z}b_{z} color space (930). The image processing system maps the J_{z}, a_{z}, and b_{z} channels of the third image data to J_{z}, a_{z}, and b_{z} channels of first display data based at least in part on a dynamic range or color gamut associated with a display device (940). The image processing system processes the first display data for display by the display device (950).

In some implementations, the converting of the second image data to the third image data may include converting the second image data to fourth image data having long (L), medium (M), and short (S) channels associated with an LMS color space; transforming the fourth image data into fifth image data based on a perceptual quantizer (PQ) transfer function; and converting the fifth image data to the third image data in a PQ domain associated with the PQ transfer function.

In some aspects, the image processing system may further receive metadata associated with the first image data, where the metadata indicates a dynamic range or color gamut associated with a mastering display. In some implementations, the metadata may include color calibration data associated with the mastering display, a maximum frame average light level, a maximum content light level, RGB primaries, white point, or display maximum and minimum light levels.

In some implementations, the mapping of the J_{z}, a_{z}, and b_{z} channels of the third image data to the J_{z}, a_{z}, and b_{z} channels of the first display data may include generating a plurality of lookup tables (LUTs) based at least in part on the received metadata and the dynamic range or color gamut associated with the display device; mapping the J_{z}, a_{z}, and b_{z} channels of the third image data to the J_{z} channel of the first display data based at least in part on one or more first LUTs of the plurality of LUTs; and mapping the J_{z}, a_{z}, and b_{z} channels of the third image data to the a_{z} and b_{z} channels of the first display data based at least in part on one or more second LUTs of the plurality of LUTs.

In some implementations, the mapping of the J_{z}, a_{z}, and b_{z} channels of the third image data to the a_{z} and b_{z} channels of the first display data may include mapping the J_{z}, a_{z}, and b_{z} channels of the third image data to global saturation values based on the one or more second LUTs; classifying one or more features in the image based on a neural network model; and remapping the global saturation values to the a_{z} and b_{z} channels of the first display data based at least in part on the classifications of the one or more features.

In some implementations, the mapping of the J_{z}, a_{z}, and b_{z} channels of the third image data to the J_{z} channel of the first display data may include mapping the J_{z}, a_{z}, and b_{z} channels of the third image data to global tone values within a spectrum of values based on the one or more first LUTs, where the spectrum is partitioned into a plurality of bands; and remapping the global tone values in each band of the plurality of bands to respective equalized tone values within the band based on histogram equalization of the global tone values.

In some implementations, the mapping of the J_{z}, a_{z}, and b_{z} channels of the third image data to the J_{z} channel of the first display data may further include extracting details in the image based on differences between the equalized tone values and the J_{z} channel of the third image data; and adjusting the equalized tone values based on the extracted details.

In some implementations, the mapping of the J_{z}, a_{z}, and b_{z} channels of the third image data to the a_{z} and b_{z} channels of the first display data may include mapping the J_{z}, a_{z}, and b_{z} channels of the third image data to global saturation values based on the one or more second LUTs; and dynamically adjusting the global saturation values based at least in part on the equalized tone values.

In some implementations, the processing of the first display data may include converting the first display data to second display data having R, G, and B channels associated with the RGB color space; and transforming the second display data into third display data based on an inverse of an EOTF associated with the display device.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method of image processing, comprising:
receiving first image data representing an image produced by an image capture device based on an opto-electrical transfer function (OETF);
transforming the first image data into second image data based on an inverse of the OETF, the second image data having red (R), green (G), and blue (B) channels associated with an RGB color space;
converting the second image data to third image data having lightness (J_{z}), redness-greenness (a_{z}), and yellowness-blueness (b_{z}) channels associated with a J_{z}a_{z}b_{z} color space;
mapping the J_{z}, a_{z}, and b_{z} channels of the third image data to J_{z}, a_{z}, and b_{z} channels of first display data based at least in part on a dynamic range or color gamut associated with a display device; and
processing the first display data for display by the display device.

2. The method of claim 1, wherein the converting of the second image data to the third image data comprises:
converting the second image data to fourth image data having long (L), medium (M), and short (S) channels associated with an LMS color space;
transforming the fourth image data into fifth image data based on a perceptual quantizer (PQ) transfer function; and
converting the fifth image data to the third image data in a PQ domain associated with the PQ transfer function.

3. The method of claim 1, further comprising:
receiving metadata associated with the first image data, the metadata indicating a dynamic range or color gamut associated with a mastering display.

4. The method of claim 3, wherein the metadata includes color calibration data associated with the mastering display, a maximum frame average light level, a maximum content light level, RGB primaries, white point, or display maximum and minimum light levels.

5. The method of claim 3, wherein the mapping of the J_{z}, a_{z}, and b_{z} channels of the third image data to the J_{z}, a_{z}, and b_{z} channels of the first display data comprises:
generating a plurality of lookup tables (LUTs) based at least in part on the received metadata and the dynamic range or color gamut associated with the display device;
mapping the J_{z}, a_{z}, and b_{z} channels of the third image data to the J_{z} channel of the first display data based at least in part on one or more first LUTs of the plurality of LUTs; and
mapping the J_{z}, a_{z}, and b_{z} channels of the third image data to the a_{z} and b_{z} channels of the first display data based at least in part on one or more second LUTs of the plurality of LUTs.

6. The method of claim 5, wherein the mapping of the J_{z}, a_{z}, and b_{z} channels of the third image data to the a_{z} and b_{z} channels of the first display data comprises:
mapping the J_{z}, a_{z}, and b_{z} channels of the third image data to global saturation values based on the one or more second LUTs;
classifying one or more features in the image based on a neural network model; and
remapping the global saturation values to the a_{z} and b_{z} channels of the first display data based at least in part on the classifications of the one or more features.

7. The method of claim 5, wherein the mapping of the J_{z}, a_{z}, and b_{z} channels of the third image data to the J_{z} channel of the first display data comprises:
mapping the J_{z}, a_{z}, and b_{z} channels of the third image data to global tone values within a spectrum of values based on the one or more first LUTs, the spectrum being partitioned into a plurality of bands; and
remapping the global tone values in each band of the plurality of bands to respective equalized tone values within the band based on histogram equalization of the global tone values.

8. The method of claim 7, wherein the mapping of the J_{z}, a_{z}, and b_{z} channels of the third image data to the J_{z} channel of the first display data further comprises:
extracting details in the image based on differences between the equalized tone values and the J_{z} channel of the third image data; and
adjusting the equalized tone values based on the extracted details.

9. The method of claim 8, wherein the adjusting of the equalized tone values comprises selectively blending the equalized tone values with the J_{z} channel of the third image data;
wherein, optionally, the method further comprises determining whether each pixel of the image is associated with a flat region or a textured region, the selective blending of the equalized tone values being based on whether each pixel of the image is associated with a flat region or a textured region.

10. The method of claim 7, wherein the mapping of the J_{z}, a_{z}, and b_{z} channels of the third image data to the a_{z} and b_{z} channels of the first display data comprises:
mapping the J_{z}, a_{z}, and b_{z} channels of the third image data to global saturation values based on the one or more second LUTs; and
dynamically adjusting the global saturation values based at least in part on the equalized tone values.

11. The method of claim 1, wherein the processing of the first display data comprises:
converting the first display data to second display data having R, G, and B channels associated with the RGB color space; and
transforming the second display data into third display data based on an inverse of an electro-optical transfer function (EOTF) associated with the display device.

12. An image processor comprising:
a processing system; and
a memory storing instructions that, when executed by the processing system, causes the image processor to:
receive first image data representing an image produced by an image capture device based on an opto-electrical transfer function (OETF);
transform the first image data into second image data based on an inverse of the OETF, the second image data having red (R), green (G), and blue (B) channels associated with an RGB color space;
convert the second image data to third image data having lightness (J_{z}), redness-greenness (a_{z}), and yellowness-blueness (b_{z}) channels associated with a J_{z}a_{z}b_{z} color space;
map the J_{z}, a_{z}, and b_{z} channels of the third image data to J_{z}, a_{z}, and b_{z} channels of first display data based at least in part on a dynamic range or color gamut associated with a display device; and
process the first display data for display by the display device.

13. The image processor of claim 12, wherein the converting of the second image data to the third image data comprises:
converting the second image data to fourth image data having long (L), medium (M), and short (S) channels associated with an LMS color space;
transforming the fourth image data into fifth image data based on a perceptual quantizer (PQ) transfer function; and
converting the fifth image data to the third image data in a PQ domain associated with the PQ transfer function.

14. The image processor of claim 12, wherein execution of the instructions further causes the image processor to:
receive metadata associated with the first image data, the metadata indicating a dynamic range or color gamut associated with a mastering display.

15. The image processor of claim 14, wherein the mapping of the J_{z}, a_{z}, and b_{z} channels of the third image data to the J_{z}, a_{z}, and b_{z} channels of the first display data comprises:
generating a plurality of lookup tables (LUTs) based at least in part on the received metadata and the dynamic range or color gamut associated with the display device;
mapping the J_{z}, a_{z}, and b_{z} channels of the third image data to the J_{z} channel of the first display data based at least in part on one or more first LUTs of the plurality of LUTs; and
mapping the J_{z}, a_{z}, and b_{z} channels of the third image data to the a_{z} and b_{z} channels of the first display data based at least in part on one or more second LUTs of the plurality of LUTs.

16. The image processor of claim 15, wherein the mapping of the J_{z}, a_{z}, and b_{z} channels of the third image data to the a_{z} and b_{z} channels of the first display data comprises:
mapping the J_{z}, a_{z}, and b_{z} channels of the third image data to global saturation values based on the one or more second LUTs;
classifying one or more features in the image based on a neural network model; and
remapping the global saturation values to the a_{z} and b_{z} channels of the first display data based at least in part on the classifications.

17. The image processor of claim 15, wherein the mapping of the J_{z}, a_{z}, and b_{z} channels of the third image data to the J_{z} channel of the first display data comprises:
mapping the J_{z}, a_{z}, and b_{z} channels of the third image data to global tone values within a spectrum of values based on the one or more first LUTs, the spectrum being partitioned into a plurality of bands; and
remapping the global tone values in each band of the plurality of bands to respective equalized tone values in the band based on histogram equalization of the global tone values.

18. The image processor of claim 17, wherein the mapping of the J_{z}, a_{z}, and b_{z} channels of the third image data to the J_{z} channel of the first display data further comprises extracting details in the image based on differences between the equalized tone values and the J_{z} channel of the third image data, and adjusting the equalized tone values based on the extracted details; and/or
wherein the mapping of the J_{z}, a_{z}, and b_{z} channels of the third image data to the a_{z} and b_{z} channels of the first display data comprises mapping the J_{z}, a_{z}, and b_{z} channels of the third image data to global saturation values based on the one or more second LUTs, and dynamically adjusting the global saturation values based at least in part on the equalized tone values.

## Patentansprüche

1. Verfahren für die Bildverarbeitung, umfassend:
Empfangen erster Bilddaten, die ein Bild darstellen, das von einer Bildaufnahmevorrichtung produziert wurde, basierend auf einer optoelektrischen Übertragungsfunktion (OETF);
Umwandeln der ersten Bilddaten in zweite Bilddaten basierend auf einer Inversen der OETF, wobei die zweiten Bilddaten Rot- (R), Grün- (G) und Blau- (B) Kanäle aufweisen, die einem RGB-Farbraum zugeordnet sind;
Konvertieren der zweiten Bilddaten in dritte Bilddaten mit Helligkeits- (J_{z}), Rot-Grün-(a_{z}) und Gelb-Blau- (b_{z}) Kanälen, die einem J_{z}a_{z}b_{z}-Farbraum zugeordnet sind;
Abbilden der J_{z}-, a_{z}- und b_{z}-Kanäle der dritten Bilddaten auf J_{z}-, a_{z}- und b_{z}-Kanäle erster Anzeigedaten wenigstens teilweise basierend auf einem Dynamikbereich oder Farbumfang, der einer Anzeigevorrichtung zugeordnet ist; und
Verarbeiten der ersten Anzeigedaten für die Anzeige durch die Anzeigevorrichtung.

2. Verfahren nach Anspruch 1, wobei das Konvertieren der zweiten Bilddaten in die dritten Bilddaten umfasst:
Konvertieren der zweiten Bilddaten in vierte Bilddaten mit langen (L), mittleren (M) und kurzen (S) Kanälen, die einem LMS-Farbraum zugeordnet sind;
Umwandeln der vierten Bilddaten in fünfte Bilddaten basierend auf einer Perceptual Quantizer(PQ)-Übertragungsfunktion; und
Umwandeln der fünften Bilddaten in die dritten Bilddaten in einer PQ-Domäne, die der PQ-Übertragungsfunktion zugeordnet ist.

3. Verfahren nach Anspruch 1, das ferner umfasst:
Empfangen von Metadaten, die den ersten Bilddaten zugeordnet sind, wobei die Metadaten einen Dynamikbereich oder einen Farbumfang angeben, die einer Mastering-Anzeige zugeordnet sind.

4. Verfahren nach Anspruch 3, wobei die Metadaten Farbkalibrierungsdaten, die der Mastering-Anzeige zugeordnet sind, einen maximalen durchschnittlichen Helligkeitspegel des Einzelbildes, einen maximalen Helligkeitspegel des Inhalts, RGB-Primärfarben, einen Weißpunkt oder maximale und minimale Helligkeitspegel der Anzeige beinhalten.

5. Verfahren nach Anspruch 3, wobei die Abbildung der J_{z}-, a_{z}- und b_{z}-Kanäle der dritten Bilddaten auf die J_{z}-, a_{z}- und b_{z}-Kanäle der ersten Anzeigedaten umfasst:
Erzeugen einer Mehrzahl von Nachschlagetabellen (LUTs) basierend wenigstens teilweise auf den empfangenen Metadaten und dem der Anzeigevorrichtung zugeordneten Dynamikbereich oder Farbraum;
Abbilden der J_{z}-, a_{z}- und b_{z}-Kanäle der dritten Bilddaten auf den J_{z}-Kanal der ersten Anzeigedaten wenigstens teilweise basierend auf einer oder mehreren ersten LUTs aus der Mehrzahl von LUTs; und
Abbilden der J_{z}-, a_{z}- und b_{z}-Kanäle der dritten Bilddaten auf die a_{z}- und b_{z}-Kanäle der ersten Anzeigedaten wenigstens teilweise basierend auf einer oder mehreren zweiten LUTs aus der Mehrzahl von LUTs.

6. Verfahren nach Anspruch 5, wobei die Abbildung der J_{z}-, a_{z}- und b_{z}-Kanäle der dritten Bilddaten auf die a_{z}- und b_{z}-Kanäle der ersten Anzeigedaten umfasst:
Abbilden der J_{z}-, a_{z}- und b_{z}-Kanäle der dritten Bilddaten auf globale Sättigungswerte basierend auf der einen oder den mehreren zweiten LUTs;
Klassifizieren eines oder mehrerer Merkmale in dem Bild basierend auf einem neuronalen Netzwerkmodell; und
Neuabbilden der globalen Sättigungswerte auf die a_{z}- und b_{z}-Kanäle der ersten Anzeigedaten basierend wenigstens teilweise auf den Klassifizierungen des einen oder der mehreren Merkmale.

7. Verfahren nach Anspruch 5, wobei die Abbildung der J_{z}-, a_{z}- und b_{z}-Kanäle der dritten Bilddaten auf den J_{z}-Kanal der ersten Anzeigedaten umfasst:
Abbilden der J_{z}-, a_{z}- und b_{z}-Kanäle der dritten Bilddaten auf globale Tonwerte innerhalb eines Spektrums von Werten basierend auf der einen oder den mehreren ersten LUTs, wobei das Spektrum in eine Mehrzahl von Bändern unterteilt ist; und
Neuabbilden der globalen Tonwerte in jedem Band der Mehrzahl von Bändern auf jeweilige ausgeglichene Tonwerte innerhalb des Bandes basierend auf einer Histogrammausgleichung der globalen Tonwerte.

8. Verfahren nach Anspruch 7, wobei die Abbildung der J_{z}-, a_{z}- und b_{z}-Kanäle der dritten Bilddaten auf den J_{z}-Kanal der ersten Anzeigedaten ferner umfasst:
Extrahieren von Einzelheiten in dem Bild basierend auf Unterschieden zwischen den ausgeglichenen Tonwerten und dem J_{z}-Kanal der dritten Bilddaten; und
Anpassen der ausgeglichenen Tonwerte basierend auf den extrahierten Einzelheiten.

9. Verfahren nach Anspruch 8, wobei das Anpassen der ausgeglichenen Tonwerte das selektive Mischen der ausgeglichenen Tonwerte mit dem J_{z}-Kanal der dritten Bilddaten umfasst;
wobei das Verfahren optional ferner das Bestimmen umfasst, ob jedes Pixel des Bildes einem flachen Bereich oder einem strukturierten Bereich zugeordnet ist, wobei das selektive Mischen der ausgeglichenen Tonwerte darauf basiert, ob jedes Pixel des Bildes einem flachen Bereich oder einem strukturierten Bereich zugeordnet ist.

10. Verfahren nach Anspruch 7, wobei die Abbildung der J_{z}-, a_{z}- und b_{z}-Kanäle der dritten Bilddaten auf die a_{z}- und b_{z}-Kanäle der ersten Anzeigedaten umfasst:
Abbilden der J_{z}-, a_{z}- und b_{z}-Kanäle der dritten Bilddaten auf globale Sättigungswerte basierend auf der einen oder den mehreren zweiten LUTs; und
dynamisches Anpassen der globalen Sättigungswerte wenigstens teilweise basierend auf den ausgeglichenen Tonwerten.

11. Verfahren nach Anspruch 1, wobei die Verarbeitung der ersten Anzeigedaten umfasst:
Konvertieren der ersten Anzeigedaten in zweite Anzeigedaten mit R-, G- und B-Kanälen, die dem RGB-Farbraum zugeordnet sind; und
Umwandeln der zweiten Anzeigedaten in dritte Anzeigedaten basierend auf einer Inversen einer elektrooptischen Übertragungsfunktion (EOTF), die der Anzeigevorrichtung zugeordnet ist.

12. Bildprozessor, umfassend:
ein Verarbeitungssystem; und
einen Speicher, der Anweisungen speichert, die, wenn sie von dem Verarbeitungssystem ausgeführt werden, den Bildprozessor veranlassen, zum:
Empfangen erster Bilddaten, die ein Bild darstellen, das von einer Bildaufnahmevorrichtung produziert wurde, basierend auf einer optoelektrischen Übertragungsfunktion (OETF);
Umwandeln der ersten Bilddaten in zweite Bilddaten basierend auf einer Inversen der OETF, wobei die zweiten Bilddaten Rot- (R), Grün- (G) und Blau- (B) Kanäle aufweisen, die einem RGB-Farbraum zugeordnet sind;
Konvertieren der zweiten Bilddaten in dritte Bilddaten mit Helligkeits- (J_{z}), Rot-Grün- (a_{z}) und Gelb-Blau- (b_{z}) Kanälen, die einem J_{z}a_{z}b_{z}-Farbraum zugeordnet sind;
Abbilden der J_{z}-, a_{z}- und b_{z}-Kanäle der dritten Bilddaten auf J_{z}-, a_{z}- und b_{z}-Kanäle erster Anzeigedaten wenigstens teilweise basierend auf einem Dynamikbereich oder Farbumfang, der einer Anzeigevorrichtung zugeordnet ist; und
Verarbeiten der ersten Anzeigedaten für die Anzeige durch die Anzeigevorrichtung.

13. Bildprozessor nach Anspruch 12, wobei das Konvertieren der zweiten Bilddaten in die dritten Bilddaten umfasst:
Konvertieren der zweiten Bilddaten in vierte Bilddaten mit langen (L), mittleren (M) und kurzen (S) Kanälen, die einem LMS-Farbraum zugeordnet sind;
Umwandeln der vierten Bilddaten in fünfte Bilddaten basierend auf einer Perceptual Quantizer(PQ)-Übertragungsfunktion; und
Konvertieren der fünften Bilddaten in die dritten Bilddaten in einer PQ-Domäne, die der PQ-Übertragungsfunktion zugeordnet ist.

14. Bildprozessor nach Anspruch 12, wobei die Ausführung der Anweisungen den Bildprozessor ferner veranlasst, zum:
Empfangen von Metadaten, die den ersten Bilddaten zugeordnet sind, wobei die Metadaten einen Dynamikbereich oder einen Farbumfang angeben, die einer Mastering-Anzeige zugeordnet sind.

15. Bildprozessor nach Anspruch 14, wobei die Abbildung der J_{z}-, a_{z}- und b_{z}-Kanäle der dritten Bilddaten auf die J_{z}-, a_{z}- und b_{z}-Kanäle der ersten Anzeigedaten umfasst:
Erzeugen einer Mehrzahl von Nachschlagetabellen (LUTs) basierend wenigstens teilweise auf den empfangenen Metadaten und dem der Anzeigevorrichtung zugeordneten Dynamikbereich oder Farbraum;
Abbilden der J_{z}-, a_{z}- und b_{z}-Kanäle der dritten Bilddaten auf den J_{z}-Kanal der ersten Anzeigedaten wenigstens teilweise basierend auf einer oder mehreren ersten LUTs aus der Mehrzahl von LUTs; und
Abbilden der J_{z}-, a_{z}- und b_{z}-Kanäle der dritten Bilddaten auf die a_{z}- und b_{z}-Kanäle der ersten Anzeigedaten wenigstens teilweise basierend auf einer oder mehreren zweiten LUTs aus der Mehrzahl von LUTs.

16. Verfahren nach Anspruch 15, wobei die Abbildung der J_{z}-, a_{z}- und b_{z}-Kanäle der dritten Bilddaten auf die a_{z}- und b_{z}-Kanäle der ersten Anzeigedaten umfasst:
Abbilden der J_{z}-, a_{z}- und b_{z}-Kanäle der dritten Bilddaten auf globale Sättigungswerte basierend auf der einen oder den mehreren zweiten LUTs;
Klassifizieren eines oder mehrerer Merkmale in dem Bild basierend auf einem neuronalen Netzwerkmodell; und
Neuabbilden der globalen Sättigungswerte auf die a_{z}- und b_{z}-Kanäle der ersten Anzeigedaten basierend wenigstens teilweise auf den Klassifizierungen.

17. Verfahren nach Anspruch 15, wobei die Abbildung der J_{z}-, a_{z}- und b_{z}-Kanäle der dritten Bilddaten auf den J_{z}-Kanal der ersten Anzeigedaten umfasst:
Abbilden der J_{z}-, a_{z}- und b_{z}-Kanäle der dritten Bilddaten auf globale Tonwerte innerhalb eines Spektrums von Werten basierend auf der einen oder den mehreren ersten LUTs, wobei das Spektrum in eine Mehrzahl von Bändern unterteilt ist; und
Neuabbilden der globalen Tonwerte in jedem Band der Mehrzahl von Bändern auf jeweilige ausgeglichene Tonwerte innerhalb des Bandes basierend auf einer Histogrammausgleichung der globalen Tonwerte.

18. Verfahren nach Anspruch 17, wobei die Abbildung der J_{z}-, a_{z}- und b_{z}-Kanäle der dritten Bilddaten auf den J_{z}-Kanal der ersten Anzeigedaten ferner das Extrahieren von Einzelheiten in dem Bild basierend auf Unterschieden zwischen den ausgeglichenen Tonwerten und dem J_{z}-Kanal der dritten Bilddaten und das Anpassen der ausgeglichenen Tonwerte basierend auf den extrahierten Einzelheiten umfasst; und/oder
wobei die Abbildung der J_{z}-, a_{z}- und b_{z}-Kanäle der dritten Bilddaten auf die a_{z}- und b_{z}-Kanäle der ersten Anzeigedaten das Abbilden der J_{z}-, a_{z}- und b_{z}-Kanäle der dritten Bilddaten auf globale Sättigungswerte basierend auf der einen oder den mehreren zweiten LUTs und das dynamische Anpassen der globalen Sättigungswerte wenigstens teilweise basierend auf den ausgeglichenen Tonwerten umfasst.

## Revendications

1. Procédé de traitement d'image, comprenant :
la réception de premières données d'image représentant une image produite par un dispositif de capture d'image qui repose sur une fonction de transfert opto-électrique (OETF, opto-electrical transfer function),
la transformation des premières données d'image en deuxièmes données d'image en fonction d'une inverse de l'OETF, les deuxièmes données d'image comprenant des canaux rouge (R), vert (V) et bleu (B) associés à un espace de couleur RVB,
la conversion des deuxièmes données d'images en troisièmes données d'image comprenant des canaux de clarté (J_{z}), rouge-vert (a_{z}) et jaune-bleu (b_{z}) associés à un espace de couleur J_{z}a_{z}b_{z},
le mappage des canaux J_{z}, a_{z} et b_{z} des troisièmes données d'image sur les canaux J_{z}, a_{z} et b_{z} de premières données d'affichage en fonction, au moins en partie, d'une plage dynamique ou d'une gamme de couleurs associée à un dispositif d'affichage, et
le traitement des premières données d'affichage en vue de leur affichage par le dispositif d'affichage.

2. Procédé selon la revendication 1, dans lequel la conversion des deuxièmes données d'image en troisièmes données d'image comprend :
la conversion des deuxièmes données d'image en quatrièmes données d'image comprenant des canaux long (L), moyen (M) et court (S) associés à un espace de couleur LMS,
la transformation des quatrièmes données d'image en cinquièmes données d'image compte tenu d'une fonction de transfert de quantificateur de perception (PQ, perceptual quantizer), et
la conversion des cinquièmes données d'image en troisièmes données d'image dans un domaine PQ associé à une fonction de transfert de PQ.

3. Procédé selon la revendication 1, comprenant en outre :
la réception de métadonnées associées aux premières données d'image, lesdites métadonnées indiquant une plage dynamique ou une gamme de couleurs associée à un écran de mastering.

4. Procédé selon la revendication 3, dans lequel les métadonnées comprennent des données d'étalonnage de couleur associées à l'écran de mastering, le niveau MaxFALL (maximum frame average light level), le niveau MaxCLL (maximum content light level), les couleurs primaires RVB, le point blanc ou les niveaux de luminosité maximum et minimum de l'affichage.

5. Procédé selon la revendication 3, dans lequel le mappage des canaux J_{z}, a_{z} et b_{z} des troisièmes données d'image sur les canaux J_{z}, a_{z} et b_{z} des premières données d'affichage comprend :
la génération d'une pluralité de tables de correspondance (LUT, lookup table) en fonction, au moins en partie, des métadonnées reçues et de la plage dynamique ou de la gamme de couleurs associée au dispositif d'affichage,
le mappage des canaux J_{z}, a_{z} et b_{z} des troisièmes données d'image sur le canal J_{z} des premières données d'affichage en fonction, au moins en partie, d'une ou plusieurs premières LUT parmi la pluralité de LUT, et
le mappage des canaux J_{z}, a_{z} et b_{z} des troisièmes données d'image sur les canaux a_{z} et b_{z} des premières données d'affichage en fonction, au moins en partie, d'une ou plusieurs deuxièmes LUT parmi la pluralité de LUT.

6. Procédé selon la revendication 5, dans lequel le mappage des canaux J_{z}, a_{z} et b_{z} des troisièmes données d'image sur les canaux a_{z} et b_{z} des premières données d'affichage comprend :
le mappage des canaux J_{z}, a_{z} et b_{z} des troisièmes données d'image sur des valeurs de saturation globale en fonction de la ou des deuxièmes LUT,
la classification d'au moins une caractéristique de l'image en fonction d'un modèle de réseau neuronal, et
le remappage des valeurs de saturation globale sur les canaux a_{z} et b_{z} des premières données d'affichage en fonction, au moins en partie, de la classification de la ou des caractéristiques.

7. Procédé selon la revendication 5, dans lequel le mappage des canaux J_{z}, a_{z} et b_{z} des troisièmes données d'image sur le canal J_{z} des premières données d'affichage comprend :
le mappage des canaux J_{z}, a_{z} et b_{z} des troisièmes données d'image sur des valeurs de tonalité globale au sein d'un spectre de valeurs en fonction de la ou des premières LUT, ledit spectre étant divisé en une pluralité de bandes, et
le remappage des valeurs de tonalité globale de chaque bande de la pluralité de bandes sur des valeurs de tonalité égalisées respectives au sein de la bande en fonction de l'égalisation d'histogramme des valeurs de tonalité globale.

8. Procédé selon la revendication 7, dans lequel le mappage des canaux J_{z}, a_{z} et b_{z} des troisièmes données d'image sur le canal J_{z} des premières données d'affichage comprend en outre :
l'extraction de détails de l'image en fonction de différences entre les valeurs de tonalité égalisées et le canal J_{z} des troisièmes données d'image, et
l'ajustement des valeurs de tonalité égalisées en fonction des détails extraits.

9. Procédé selon la revendication 8, dans lequel l'ajustement des valeurs de tonalité égalisées comprend le mélange sélectif des valeurs de tonalité égalisées au canal J_{z} des troisièmes données d'image,
le procédé comprenant éventuellement en outre la détermination, pour chaque pixel de l'image, du fait que celui-ci est associé ou non à une zone plane ou à une zone texturée, le mélange sélectif des valeurs de tonalité égalisées reposant sur le fait que chaque pixel de l'image soit associé à une zone plane ou à une zone texturée.

10. Procédé selon la revendication 7, dans lequel le mappage des canaux J_{z}, a_{z} et b_{z} des troisièmes données d'image sur les canaux a_{z} et b_{z} des premières données d'affichage comprend :
le mappage des canaux J_{z}, a_{z} et b_{z} des troisièmes données d'image sur des valeurs de saturation globale en fonction de la ou des deuxièmes LUT, et
l'ajustement dynamique des valeurs de saturation globale en fonction, au moins en partie, des valeurs de tonalité égalisées.

11. Procédé selon la revendication 1, dans lequel le traitement des premières données d'affichage comprend :
la conversion des premières données d'affichage en deuxièmes données d'affichage comprenant des canaux R, V et B associés à l'espace de couleur RVB, et
la transformation des deuxièmes données d'affichage en troisièmes données d'affichage en fonction d'une inverse d'une fonction de transfert électro-optique (EOTF, electro-optical transfer function) associée au dispositif d'affichage.

12. Dispositif de traitement d'image, comprenant :
un système de traitement, et
une mémoire dans laquelle sont stockées des informations qui, lorsqu'elles sont exécutées par le système de traitement, amènent le dispositif de traitement d'image à :
recevoir des premières données d'image représentant une image produite par un dispositif de capture d'image qui repose sur une fonction de transfert opto-électrique (OETF, opto-electrical transfer function),
transformer les premières données d'image en deuxièmes données d'image en fonction d'une inverse de l'OETF, les deuxièmes données d'image comprenant des canaux rouge (R), vert (V) et bleu (B) associés à un espace de couleur RVB,
convertir les deuxièmes données d'images en troisièmes données d'image comprenant des canaux de clarté (J_{z}), rouge-vert (a_{z}) et jaune-bleu (b_{z}) associés à un espace de couleur J_{z}a_{z}b_{z},
mapper les canaux J_{z}, a_{z} et b_{z} des troisièmes données d'image sur les canaux J_{z}, a_{z} et b_{z} de premières données d'affichage en fonction, au moins en partie, d'une plage dynamique ou d'une gamme de couleurs associée à un dispositif d'affichage, et
traiter les premières données d'affichage en vue de leur affichage par le dispositif d'affichage.

13. Dispositif de traitement d'image selon la revendication 12, dans lequel la conversion des deuxièmes données d'image en troisièmes données d'image comprend :
la conversion des deuxièmes données d'image en quatrièmes données d'image comprenant des canaux long (L), moyen (M) et court (S) associés à un espace de couleur LMS,
la transformation des quatrièmes données d'image en cinquièmes données d'image compte tenu d'une fonction de transfert de quantificateur de perception (PQ, perceptual quantizer), et
la conversion des cinquièmes données d'image en troisièmes données d'image dans un domaine PQ associé à une fonction de transfert de PQ.

14. Dispositif de traitement d'image selon la revendication 12, dans lequel l'exécution des instructions amène en outre le dispositif de traitement à :
recevoir des métadonnées associées aux premières données d'image, lesdites métadonnées indiquant une plage dynamique ou une gamme de couleurs associée à un écran de mastering.

15. Dispositif de traitement d'image selon la revendication 14, dans lequel le mappage des canaux J_{z}, a_{z} et b_{z} des troisièmes données d'image sur les canaux J_{z}, a_{z} et b_{z} des premières données d'affichage comprend :
la génération d'une pluralité de tables de correspondance (LUT, lookup table) en fonction, au moins en partie, des métadonnées reçues et de la plage dynamique ou de la gamme de couleurs associée au dispositif d'affichage,
le mappage des canaux J_{z}, a_{z} et b_{z} des troisièmes données d'image sur le canal J_{z} des premières données d'affichage en fonction, au moins en partie, d'une ou plusieurs premières LUT parmi la pluralité de LUT, et
le mappage des canaux J_{z}, a_{z} et b_{z} des troisièmes données d'image sur les canaux a_{z} et b_{z} des premières données d'affichage en fonction, au moins en partie, d'une ou plusieurs deuxièmes LUT parmi la pluralité de LUT.

16. Dispositif de traitement d'image selon la revendication 15, dans lequel le mappage des canaux J_{z}, a_{z} et b_{z} des troisièmes données d'image sur les canaux a_{z} et b_{z} des premières données d'affichage comprend :
le mappage des canaux J_{z}, a_{z} et b_{z} des troisièmes données d'image sur des valeurs de saturation globale en fonction de la ou des deuxièmes LUT,
la classification d'au moins une caractéristique de l'image en fonction d'un modèle de réseau neuronal, et
le remappage des valeurs de saturation globale sur les canaux a_{z} et b_{z} des premières données d'affichage en fonction, au moins en partie, des classifications.

17. Dispositif de traitement d'image selon la revendication 15, dans lequel le mappage des canaux J_{z}, a_{z} et b_{z} des troisièmes données d'image sur le canal J_{z} des premières données d'affichage comprend :
le mappage des canaux J_{z}, a_{z} et b_{z} des troisièmes données d'image sur des valeurs de tonalité globale au sein d'un spectre de valeurs en fonction de la ou des premières LUT, ledit spectre étant divisé en une pluralité de bandes, et
le remappage des valeurs de tonalité globale de chaque bande de la pluralité de bandes sur des valeurs de tonalité égalisées respectives dans la bande en fonction de l'égalisation d'histogramme des valeurs de tonalité globale.

18. Dispositif de traitement d'image selon la revendication 17, dans lequel le mappage des canaux J_{z}, a_{z} et b_{z} des troisièmes données d'image sur le canal J_{z} des premières données d'affichage comprend en outre l'extraction de détails de l'image en fonction de différences entre les valeurs de tonalité égalisées et le canal J_{z} des troisièmes données d'image, et l'ajustement des valeurs de tonalité égalisées en fonction des détails extraits, et/ou
dans lequel le mappage des canaux J_{z}, a_{z} et b_{z} des troisièmes données d'image sur les canaux a_{z} et b_{z} des premières données d'affichage comprend le mappage des canaux J_{z}, a_{z} et b_{z} des troisièmes données d'image sur des valeurs de saturation globale en fonction de la ou des deuxièmes LUT, et l'ajustement dynamique des valeurs de saturation globale en fonction, au moins en partie, des valeurs de tonalité égalisées.
